# EUROPEAN PATENT APPLICATION

(11) **EP 4 794 397 A1**
(43) Date of publication of application: **19.08.2026**
(21) Application number: 24884168.6
(22) Date of filing: 23.08.2024
(51) Int. Cl.: H04W 48/16, H04W 72/04

(54) **COMMUNICATION METHOD AND RELATED DEVICE**

(30) Priority: 30.10.2023 CN 202311432743
(71) Applicant: HUAWEI TECHNOLOGIES CO., LTD., Shenzhen 518129 (CN)
(72) Inventor: ZHU, Shichao, Shenzhen, Guangdong 518129 (CN); SUN, Fei, Shenzhen, Guangdong 518129 (CN); ZHANG, Roujia, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2024/114238
(87) International publication number: WO 2025/092161

(57) **Abstract**

A communication method and a related device are provided, and are used in an implementation in which, when an integrated access and backhaul (integrated access and backhaul, IAB) node supports a mobile IAB mode and an IAB mode, the IAB-node, a donor node, or a core network element is used as a party for determining an operating mode of the IAB-node, so that either the mobile IAB mode or the IAB mode can be flexibly selected as the operating mode of the IAB-node, to improve communication flexibility of the IAB-node in an IAB network. In the method, the IAB-node determines that a radio resource control (radio resource control, RRC) connection between the IAB-node and the donor node has not been established, determines that the IAB-node has established the RRC connection to the donor node and that the operating mode of the IAB-node is the mobile IAB mode, or determines that the IAB-node has established the RRC connection to the donor node; and the IAB-node determines that the operating mode of the IAB-node is the IAB mode from the mobile IAB mode and the IAB mode.

## Description

This application claims priority to Chinese Patent Application No. 202311432743.1, filed with the China National Intellectual Property Administration on October 30, 2023, and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

In a communication system, an integrated access and backhaul (integrated access and backhaul, IAB) technology enables a wireless transmission solution to be used for both an access link (Access Link) and a backhaul link (Backhaul Link), which can reduce fiber deployment and lower costs.

Currently, an IAB network may include an IAB-donor node (IAB-donor node) and an IAB-node (IAB-node). The IAB-node may implement data transmission through a communication connection to the donor node.

However, in the IAB network, how to improve communication flexibility of the IAB-node is an urgent technical problem to be resolved.

### SUMMARY

This application provides a communication method and a related device, used in an implementation in which, when an IAB-node supports a mobile IAB mode and an IAB mode, the IAB-node, a donor node, or a core network element is used as a party for determining an operating mode of the IAB-node, so that either the mobile IAB mode or the IAB mode can be flexibly selected as the operating mode of the IAB-node, to improve communication flexibility of the IAB-node in an IAB network.

A first aspect of this application provides a communication method. The method is performed by an IAB-node, the method is performed by a part of components (for example, a processor, a chip, or a chip system) in the IAB-node, or the method may be implemented by a logical module or software that can implement all or some functions of the IAB-node. In the first aspect and possible implementations of the first aspect, an example in which the communication method is performed by the IAB-node is used for description. In the method, the IAB-node determines that a radio resource control (radio resource control, RRC) connection between the IAB-node and a donor node has not been established, the IAB-node determines that the IAB-node has established the RRC connection to the donor node and that an operating mode of the IAB-node is a mobile (mobile) IAB mode, or the IAB-node determines that the IAB-node has established the RRC connection to the donor node; and the IAB-node determines that the operating mode of the IAB-node is an IAB mode from the mobile IAB mode and the IAB mode.

According to the foregoing technical solution, the IAB-node may be an IAB-node supporting the mobile IAB mode and the IAB mode. When the IAB-node has not determined the operating mode (for example, the RRC connection of the IAB-node has not been established; or for another example, the RRC connection of the IAB-node has been established and the IAB-node has not sent a signal based on a backhaul link), or when the IAB-node has determined that the operating mode is the mobile IAB mode, the IAB-node may determine that the operating mode of the IAB-node is the IAB mode from the mobile IAB mode and the IAB mode. In other words, when the IAB-node supports the mobile IAB mode and the IAB mode, the IAB-node may be used as a party of determining the operating mode of the IAB-node, so that the IAB mode from the mobile IAB mode and the IAB mode can be flexibly selected as the operating mode of the IAB-node. Therefore, for an IAB-node supporting the mobile IAB mode and the IAB mode, communication only in the mobile IAB mode may not be limited, so that a network can be accessed by the IAB-node when the operating mode is the IAB mode or the operating mode of the IAB-node can be switched from the mobile IAB mode to the IAB mode, to improve communication flexibility of the IAB-node in an IAB network.

It should be understood that an RRC establishment procedure between the IAB-node and the donor node may include exchange of a plurality of pieces of information, for example, a message 1 (message 1, MSG1), a message 2 (message 2, MSG2), a message 3 (message 3, MSG3), a message 4 (message 4, MSG4), a message 5 (message 5, MSG5), a message A (message A, MSGA), and a message B (message B, MSGB). Usually, after the IAB-node sends the MSG5 to the donor node, the IAB-node may determine that the RRC connection between the IAB-node and the donor node has been established. Correspondingly, before the IAB-node sends the MSG5 to the donor node, the IAB-node may determine that the RRC connection between the IAB-node and the donor node has not been established.

Optionally, the MSG5 may indicate that the RRC has been established. Correspondingly, the MSG5 may be replaced with another description, for example, an RRC connection setup complete message.

It should be understood that the IAB-node includes a mobile terminal (mobile terminal, MT) and a distributed unit (distributed unit, DU). Usually, when the IAB-node operates in the IAB mode, the MT and the DU are connected to a same donor node. When the IAB-node operates in the mobile IAB mode, the MT and the DU may be connected to a same donor node, or may be connected to different donor nodes. In any one of the foregoing cases in which the RRC connection between the IAB-node and the donor node has not been established, the IAB-node has established the RRC connection to the donor node and the operating mode of the IAB-node is the mobile (mobile) IAB mode, or the IAB-node has established the RRC connection to the donor node, the related donor node is a donor node connected to the MT in the IAB-node.

Optionally, the donor node connected to the MT may be referred to as a non-F1-terminating central unit (non-F1-terminating donor), a radio resource control terminating central unit (RRC terminating donor), or the like. Correspondingly, the donor node connected to the DU may be referred to as an F1 terminating central unit (F1-terminating donor), a non-radio resource control terminating central unit (non-RRC-terminating donor), or the like.

In a possible implementation of the first aspect, the method further includes: The IAB-node sends first information to the donor node, where the first information indicates that the operating mode of the IAB-node is the IAB mode.

According to the foregoing technical solution, the IAB-node may further send the first information to the donor node, so that the donor node can determine, based on the first information, that the operating mode of the IAB-node is the IAB mode.

In a possible implementation of the first aspect, the first information satisfies any one of the following:
the first information includes IAB-node indication information and the first information does not include mobile IAB-node indication information;
the first information includes the IAB-node indication information and the mobile IAB-node indication information;
the first information includes the IAB-node indication information, the mobile IAB-node indication information, and first indication information, where the first indication information indicates that the IAB mode is preferred; or
the first information includes the first indication information.

According to the foregoing technical solution, the first information may be implemented in the foregoing plurality of manners. To be specific, the donor node may determine, in the foregoing plurality of manners, that the first information indicates that the operating mode of the IAB-node is the IAB mode.

In this application, preferred may be replaced with another term, for example, inclined or selected.

In a possible implementation of the first aspect, the method further includes: The IAB-node receives second information from the donor node, where the second information includes configuration information of an access link of the IAB-node and the second information does not include configuration information of a backhaul link of the IAB-node, and/or the second information indicates that both a mobile IAB authorization status and an IAB authorization status of the IAB-node are unauthorized. Alternatively, the IAB-node receives, from the donor node, indication information indicating to release the RRC connection between the IAB-node and the donor node.

According to the foregoing technical solution, for an IAB-node supporting the mobile IAB mode and the IAB mode, when the IAB-node indicates, by using the first information, that an operating mode of the IAB-node is the IAB mode, the donor node may consider that the IAB-node is abnormal or the donor node does not expect the operating mode of the IAB-node to be the IAB mode for another reason (for example, signal quality of a signal sent by the IAB-node is less than a threshold).

Therefore, when the donor node configures the configuration information of the access link of the IAB-node by using the second information, the second information sent by the donor node may not be used to send the configuration information of the backhaul link to the IAB-node. This can prevent a terminal device or another IAB-node from accessing the IAB-node as a child node, to avoid affecting communication between the terminal device and the another IAB-node.

Alternatively, the donor node may indicate, by using the second information, that both the mobile IAB authorization status and the IAB authorization status of the IAB-node are unauthorized. This can also prevent a terminal device or another IAB-node from accessing the IAB-node as a child node, to avoid affecting communication between the terminal device and the another IAB-node.

Alternatively, the donor node may send, to the IAB-node (for example, by using an RRC release message), indication information indicating to release the RRC connection between the IAB-node and the donor node, to release the RRC connection of the IAB-node. This can also prevent a terminal device or another IAB-node from accessing the IAB-node as a child node, to avoid affecting communication between the terminal device and the another IAB-node.

In a possible implementation of the first aspect, the method further includes: The IAB-node receives, from the donor node, indication information indicating to set up an F1 connection between the IAB-node and the donor node.

According to the foregoing technical solution, when the IAB-node has established the RRC connection to the donor node and the operating mode of the IAB-node is the mobile (mobile) IAB mode, the MT and the DU in the IAB-node may be respectively connected to different donor nodes. Therefore, after the donor node receives the first information, the donor node may send the indication information indicating to set up the F1 connection between the IAB-node and the donor node. In this way, the MT and the DU in the IAB-node can be connected to a same donor node, to avoid a communication error that is caused because the MT and the DU are connected to different donor nodes when the operating mode of the IAB-node is the IAB mode.

In a possible implementation of the first aspect, the method further includes: The IAB-node sends, to the donor node, request information for requesting to set up the F1 connection between the IAB-node and the donor node, where the request information includes an identifier of the donor node and/or indication information indicating that the IAB-node is authorized to operate in the IAB mode.

According to the foregoing technical solution, when the IAB-node has established the RRC connection to the donor node and the operating mode of the IAB-node is the mobile (mobile) IAB mode, the MT and the DU in the IAB-node may be respectively connected to different donor nodes. Therefore, after the IAB-node sends the first information, the IAB-node may further send, to the donor node, the request information for requesting to set up the F1 connection between the IAB-node and the donor node. In this way, the MT and the DU in the IAB-node can be connected to a same donor node, to avoid a communication error that is caused because the MT and the DU are connected to different donor nodes when the operating mode of the IAB-node is the IAB mode.

Optionally, the identifier of the donor node is an identifier of an RRC terminating donor. The IAB-node may obtain the identifier of the RRC terminating donor through an operation, administration, and maintenance (operation, administration, and maintenance, OAM), the IAB-node may obtain the identifier of the RRC terminating donor through an RRC terminating CU, or the IAB-node may obtain the identifier of the donor node through an F1-terminating donor connected to the DU. This is not limited herein.

In a possible implementation of the first aspect, that the IAB-node determines that the operating mode of the IAB-node is the IAB mode from the mobile IAB mode and the IAB mode includes: The IAB-node determines, based on second indication information from the donor node or second indication information from a core network element, that the operating mode of the IAB-node is the IAB mode from the mobile IAB mode and the IAB mode, where
the second indication information indicates at least one of the following:
the mobile IAB authorization status of the IAB-node is unauthorized;
the IAB authorization status of the IAB-node is authorized; or
the operating mode of the IAB-node is the IAB mode from the mobile IAB mode and the IAB mode.

According to the foregoing technical solution, the IAB-node may receive the second indication information sent by the donor node, or the IAB-node may receive the second indication information from the core network element through the donor node, and the second indication information indicates at least one of the foregoing, so that the IAB-node can determine, based on the at least one of the foregoing, that the operating mode of the IAB-node is the IAB mode from the mobile IAB mode and the IAB mode. In other words, a determining basis for determining, by the IAB-node, that the operating mode is the IAB mode may be the indication information provided by the donor node or the core network element.

In a possible implementation of the first aspect, the IAB-node may use locally obtained information as the determining basis for determining that the operating mode is the IAB mode.

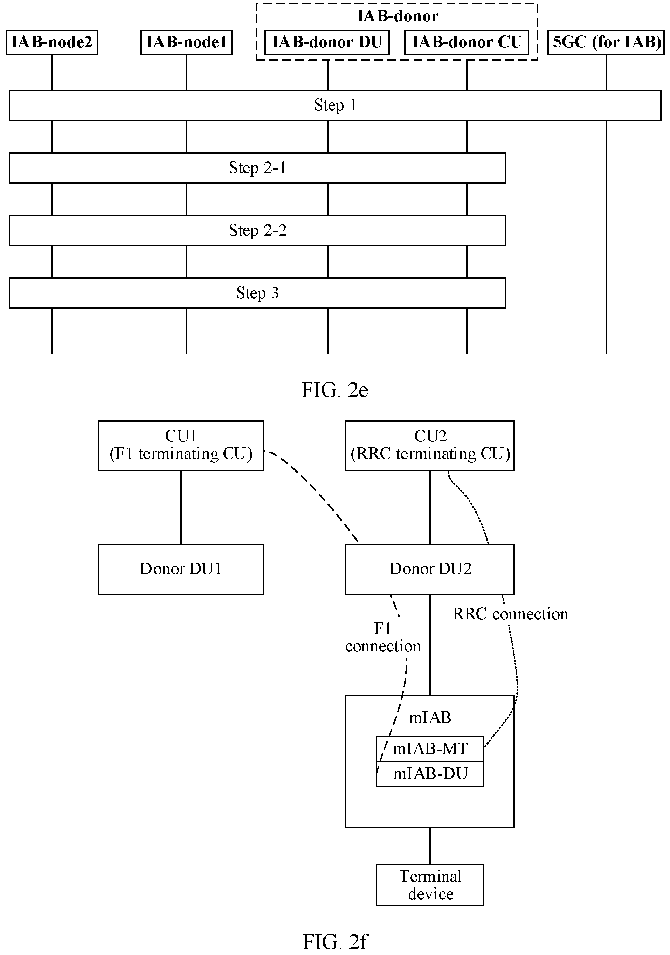

In an implementation example, energy consumption of the IAB-node operating in the mobile IAB mode may be different from that of the IAB-node operating in the IAB mode. Usually, because the mobile IAB mode supports more features (for example, migration features described in FIG. 2f to FIG. 2h below), it is possible that the energy consumption corresponding to the mobile IAB mode is greater than the energy consumption corresponding to the IAB mode. Therefore, the IAB-node may use energy state information of the IAB-node as the determining basis for determining that the operating mode is the IAB mode. For example, when the energy state information of the IAB-node indicates that energy load of the IAB-node is greater than a threshold (or remaining energy is less than a threshold), the IAB-node may determine that the operating mode is the IAB mode.

In another implementation example, node movement corresponding to the IAB-node operating in the mobile IAB mode may be different from that corresponding to the IAB-node operating in the IAB mode. Usually, the mobile IAB mode may support high-speed movement, and the IAB mode may support low-speed movement or non-movement (or may not support high-speed movement). Therefore, the IAB-node may use mobility state information of the IAB-node as the determining basis for determining that the operating mode is the IAB mode. For example, when the mobility state information of the IAB-node indicates that a moving speed of the IAB-node is less than a threshold, the IAB-node may determine that the operating mode is the IAB mode. Alternatively, the mobility state information may be determined based on a quantity of cell reselections and/or handovers of the MT in the IAB-node (namely, the IAB-MT) in a period of time. When the quantity of cell reselections and/or handovers of the IAB-MT in the period of time is greater than a threshold, the IAB-node determines that the operating mode is the mobile IAB mode. When the quantity of cell reselections and/or handovers of the IAB-MT in the period of time is less than or equal to the threshold, the IAB-node determines that the operating mode is the IAB mode.

In another implementation example, a parent node corresponding to the IAB-node operating in the mobile IAB mode may be different from that corresponding to the IAB-node operating in the IAB mode. For example, some parent nodes support only nodes that access the mobile IAB mode (denoted as first-type parent nodes), some parent nodes support only nodes that access the IAB mode (denoted as second-type parent nodes), and some parent nodes support nodes that access the mobile IAB mode and nodes that access the IAB mode (denoted as third-type parent nodes). Usually, the parent node may broadcast, in system broadcast information, indication information of a node supporting access to the mobile IAB mode. For example, indication information sent by the first-type parent node and/or indication information sent by the third-type parent node may be a mobile IAB-support (mobile iab-support) information element carried in a system information block (system information block, SIB)1, and indication information sent by the second-type parent node may be an IAB-support (iab-support) information element carried in the SIB1. Because the IAB-node may need to provide a network service for a child node through an access link, the IAB-node usually accesses a parent node with good signal quality. Correspondingly, the IAB-node may use signal quality information of the first-type parent node and/or signal quality information of the third-type parent node as the determining basis for determining that the operating mode is the IAB mode. For example, when signal quality corresponding to the signal quality information of the first-type parent node and/or signal quality corresponding to the signal quality information of the third-type parent node are/is less than a threshold, the IAB-node may determine that the IAB-node currently in the mobile IAB mode may not obtain a high-quality communication service. Therefore, the IAB-node may determine that the operating mode is the IAB mode, access the second-type parent node, and obtain a communication service through the second-type parent node. Correspondingly, when the signal quality corresponding to the signal quality information of the first-type parent node or the third-type parent node is not less than the threshold, the IAB-node determines that the operating mode is the mobile IAB mode, accesses the first-type parent node or the third-type parent node, and obtains a communication service through the first-type parent node or the third-type parent node.

A second aspect of this application provides a communication method. The method is performed by an IAB-node, the method is performed by a part of components (for example, a processor, a chip, or a chip system) in the IAB-node, or the method may be implemented by a logical module or software that can implement all or some functions of the IAB-node. In the second aspect and possible implementations of the second aspect, an example in which the communication method is performed by the IAB-node is used for description. In the method, the IAB-node determines that the IAB-node has established an RRC connection to a donor node and that an operating mode of the IAB-node is an IAB mode; or the IAB-node determines that the operating mode of the IAB-node is a mobile IAB mode.

According to the foregoing technical solution, when the IAB-node determines that the IAB-node has established the RRC connection to the donor node and that the operating mode of the IAB-node is the IAB mode, the IAB-node may determine that the operating mode of the IAB-node is the mobile IAB mode. In other words, when the IAB-node has determined that the operating mode is the IAB mode, the IAB-node may determine that the operating mode of the IAB-node is the mobile IAB mode, in other words, the IAB-node may be used as a party of determining the operating mode of the IAB-node, so that the mobile IAB mode from the mobile IAB mode and the IAB mode can be flexibly selected as the operating mode of the IAB-node. Therefore, for an IAB-node supporting the mobile IAB mode and the IAB mode, communication only in the mobile IAB mode may not be limited, so that the operating mode of the IAB-node can be switched from the IAB mode to the mobile IAB mode while the operating mode of the IAB-node is in the IAB mode, to improve communication flexibility of the IAB-node in an IAB network.

In a possible implementation of the second aspect, the method further includes: The IAB-node sends third information to the donor node, where the third information indicates that the operating mode of the IAB-node is the mobile IAB mode.

According to the foregoing technical solution, the IAB-node may further send the third information to the donor node, so that the donor node can determine, based on the third information, that the operating mode of the IAB-node is the mobile IAB mode.

In a possible implementation of the second aspect, the third information satisfies any one of the following:
the third information includes mobile IAB-node indication information; or
the third information includes fourth indication information, where the fourth indication information indicates that the mobile IAB mode is preferred.

According to the foregoing technical solution, the third information may be implemented in the foregoing plurality of manners. To be specific, the donor node may determine, in the foregoing plurality of manners, that the third information indicates that the operating mode of the IAB-node is the mobile IAB mode.

In a possible implementation of the second aspect, the method further includes: The IAB-node receives fourth information from the donor node, where the fourth information indicates to hand over a child node of the IAB-node to another network device, and/or the fourth information indicates to release a connection between the IAB-node and a first parent node of the IAB-node or release a connection between the IAB-node and a second parent node of the IAB-node, and the IAB-node communicates with the first parent node and the second parent node through dual connectivity.

According to the foregoing technical solution, the IAB-node may support different communication features in different operating modes. For example, when the IAB-node operates in the IAB mode, the IAB-node supports dual connectivity to two different parent nodes and supports access to a child node. However, when the IAB-node operates in the mobile IAB mode, the IAB-node does not support dual connectivity to two different parent nodes and does not support access to a child node. Therefore, when the IAB-node indicates, by using the third information, to switch the operating mode of the IAB-node from the IAB mode to the mobile IAB mode, the donor node may indicate, by using the fourth information, to hand over the child node of the IAB-node and/or indicate to release one of the dual connectivity, to adapt to the mobile IAB mode of the IAB-node. This can avoid a communication error of the child node of the IAB-node operating in the mobile IAB mode and/or avoid a communication error of the IAB-node in a dual-connection scenario.

It should be understood that the child node is another IAB-node.

It should be understood that the first parent node and the second parent node may be different IAB-nodes. Alternatively, the first parent node and the second parent node may be a same IAB-node. Correspondingly, that the IAB-node communicates with the first parent node and the second parent node through the dual connectivity may be understood as that the IAB-node communicates with different cells served by the same IAB-node through the dual connectivity.

In a possible implementation of the second aspect, that the IAB-node determines that the operating mode of the IAB-node is the mobile IAB mode includes: The IAB-node determines, based on third indication information from the donor node or third indication information from a core network element, that the operating mode of the IAB-node is the mobile IAB mode, where
the third indication information indicates at least one of the following:
a mobile IAB authorization status of the IAB-node is authorized;
an IAB authorization status of the IAB-node is unauthorized; or
the operating mode of the IAB-node is the mobile IAB mode from the mobile IAB mode and the IAB mode.

According to the foregoing technical solution, the IAB-node may receive the third indication information sent by the donor node, or the IAB-node may receive the third indication information from the core network element through the donor node, and the third indication information indicates at least one of the foregoing, so that the IAB-node can determine, based on the at least one of the foregoing, that the operating mode of the IAB-node is the mobile IAB mode from the mobile IAB mode and the IAB mode. In other words, a determining basis for determining, by the IAB-node, that the operating mode is the mobile IAB mode may be the indication information provided by the donor node or the core network element.

In a possible implementation of the second aspect, the IAB-node may use locally obtained information as the determining basis for determining that the operating mode is the mobile IAB mode.

In an implementation example, energy consumption of the IAB-node operating in the mobile IAB mode may be different from that of the IAB-node operating in the IAB mode. Usually, because the mobile IAB mode supports more features (for example, migration features described in FIG. 2f to FIG. 2h below), it is possible that the energy consumption corresponding to the mobile IAB mode is greater than the energy consumption corresponding to the IAB mode. Therefore, the IAB-node may use energy state information of the IAB-node as the determining basis for determining that the operating mode is the mobile IAB mode. For example, when the energy state information of the IAB-node indicates that energy load of the IAB-node is less than a threshold (or remaining energy is greater than a threshold), the IAB-node may determine that the operating mode is the mobile IAB mode.

In another implementation example, node movement corresponding to the IAB-node operating in the mobile IAB mode may be different from that corresponding to the IAB-node operating in the IAB mode. Usually, the mobile IAB mode may support high-speed movement, and the IAB mode may support low-speed movement or non-movement (or may not support high-speed movement). Therefore, the IAB-node may use mobility state information of the IAB-node as the determining basis for determining that the operating mode is the IAB mode. For example, when the mobility state information of the IAB-node indicates that a moving speed of the IAB-node is greater than a threshold, the IAB-node may determine that the operating mode is the mobile IAB mode.

In another implementation example, a parent node corresponding to the IAB-node operating in the mobile IAB mode may be different from that corresponding to the IAB-node operating in the IAB mode. For example, some parent nodes support only nodes that access the mobile IAB mode (denoted as first-type parent nodes), some parent nodes support only nodes that access the IAB mode (denoted as second-type parent nodes), and some parent nodes support nodes that access the mobile IAB mode and nodes that access the IAB mode (denoted as third-type parent nodes). Usually, the parent node may broadcast, in system broadcast information, indication information of a node supporting access to the mobile IAB mode. For example, indication information sent by the first-type parent node and/or indication information sent by the third-type parent node may be a mobile IAB-support (mobile iab-support) information element carried in a system information block (system information block, SIB)1, and indication information sent by the second-type parent node may be an IAB-support (iab-support) information element carried in the SIB1. Because the IAB-node may need to provide a network service for the child node through an access link, the IAB-node usually accesses a parent node with good signal quality. Correspondingly, the IAB-node may use signal quality information of the second-type parent node as the determining basis for determining that the operating mode is the mobile IAB mode. For example, when signal quality corresponding to the signal quality information of the second-type parent node is less than a threshold, the IAB-node may determine that the IAB-node currently in the IAB mode may not obtain a high-quality communication service. Therefore, the IAB-node may determine that the operating mode is the mobile IAB mode, access the first-type parent node or the third-type parent node, and obtain a communication service through the first-type parent node or the third-type parent node.

A third aspect of this application provides a communication method. The method is performed by a donor node, the method is performed by a part of components (for example, a processor, a chip, or a chip system) in the donor node, or the method may be implemented by a logical module or software that can implement all or some functions of the donor node. In the third aspect and possible implementations of the third aspect, an example in which the communication method is performed by the donor node is used for description. In the method, the donor node receives, from an IAB-node, indication information indicating that the IAB-node supports an operating mode being a mobile IAB mode; and the donor node determines that the operating mode of the IAB-node is either the mobile IAB mode or an IAB mode.

According to the foregoing technical solution, the donor node may receive, from the IAB-node, the indication information indicating that the IAB-node supports the operating mode being the mobile IAB mode, and determine, based on the indication information, that the IAB-node may be an IAB-node supporting the mobile IAB mode and the IAB mode. Then, the donor node may determine that the operating mode of the IAB-node is either the mobile IAB mode or the IAB mode. In other words, when the IAB-node supports the mobile IAB mode and the IAB mode, the donor node may be used as a party of determining the operating mode of the IAB-node, so that either the mobile IAB mode or the IAB mode can be flexibly selected as the operating mode of the IAB-node. Therefore, for the IAB-node supporting the mobile IAB mode and the IAB mode, the operating mode of the IAB-node can be either the mobile IAB mode or the IAB mode through decision of the donor node, to improve communication flexibility of the IAB-node in an IAB network.

In a possible implementation of the third aspect, that the donor node determines that the operating mode of the IAB-node is either the mobile IAB mode or the IAB mode includes: The donor node determines that the operating mode of the IAB-node is either the mobile IAB mode or the IAB mode, based on at least one of the following, including: first information from the IAB-node, third information from the IAB-node, fifth information from a core network element, and mobility state information of the IAB-node, where the first information indicates that the operating mode of the IAB-node is the IAB mode, the third information indicates that the operating mode of the IAB-node is the mobile IAB mode, and the fifth information indicates that the operating mode of the IAB-node is either the mobile IAB mode or the IAB mode.

According to the foregoing technical solution, in a process in which the donor node determines that the operating mode of the IAB-node is either the mobile IAB mode or the IAB mode, a determining basis of the donor node may be at least one of the foregoing, to improve flexibility of implementing the solution.

It should be understood that, when the donor node uses the mobility state information of the IAB-node as the determining basis, after the donor node receives the mobility state information from the IAB-node, for a process in which the donor node determines the operating mode of the IAB-node based on the mobility state information, refer to the foregoing related descriptions of the first aspect.

Optionally, after the mobility state information of the IAB-node is determined, the donor node may receive an RRC message sent by the IAB-node, where the RRC message carries the mobility state information of the IAB-node. For example, the mobility state information of the IAB-node may be carried or indicated by using a mobility state (mobilityState) information element, and the mobilityState information element may be carried in an RRC resume complete (RRCResumeComplete) message or an RRC setup complete (RRCSetupComplete) message.

In a possible implementation of the third aspect, the method further includes: The donor node sends sixth information to the core network element, where the sixth information indicates that the operating mode of the IAB-node is either the mobile IAB mode or the IAB mode.

According to the foregoing technical solution, after the donor node determines that the operating mode of the IAB-node is either the mobile IAB mode or the IAB mode, the donor node may further send the sixth information to the core network element, so that the core network element determines a decision result of the donor node based on the sixth information.

In a possible implementation of the third aspect, when the sixth information indicates that the operating mode of the IAB-node is the IAB mode, the sixth information satisfies any one of the following:
the sixth information includes IAB-node indication information and the sixth information does not include mobile IAB-node indication information;
the sixth information includes the IAB-node indication information and the mobile IAB-node indication information;
the sixth information includes the IAB-node indication information, the mobile IAB-node indication information, and first indication information, where the first indication information indicates that the IAB mode is preferred; or
the sixth information includes the first indication information.

According to the foregoing technical solution, when the donor node determines that the operating mode of the IAB-node is the IAB mode, the sixth information sent by the donor node satisfies any one of the foregoing. Correspondingly, the core network element may determine, based on any one of the foregoing, that the sixth information indicates that the operating mode of the IAB-node is the IAB mode.

In a possible implementation of the third aspect, when the donor node determines that the operating mode of the IAB-node is the IAB mode, the method further includes at least one of the following:

The donor node sends second information to the IAB-node, where the second information includes configuration information of an access link of the IAB-node and the second information does not include configuration information of a backhaul link of the IAB-node, and/or the second information indicates that both a mobile IAB authorization status and an IAB authorization status of the IAB-node are unauthorized;
the donor node sends, to the IAB-node, indication information indicating to release an RRC connection between the IAB-node and the donor node; or
the donor node sends second indication information to the IAB-node, where the second indication information indicates at least one of the following: the mobile IAB authorization status of the IAB-node is unauthorized; the IAB authorization status of the IAB-node is authorized; or the operating mode of the IAB-node is the IAB mode from the mobile IAB mode and the IAB mode.

According to the foregoing technical solution, when the donor node determines that the operating mode of the IAB-node is the IAB mode, the donor node may further perform at least one of the foregoing interactions, so that the IAB-node can subsequently implement communication in the IAB mode based on the at least one of the foregoing interactions.

In a possible implementation of the third aspect, when the donor node determines that the operating mode of the IAB-node is the mobile IAB mode, the method further includes at least one of the following:

The donor node sends fourth information to the IAB-node, where the fourth information indicates to hand over a child node of the IAB-node to another node, and/or the fourth information indicates to release a connection between the IAB-node and a first parent node or release a connection between the IAB-node and a second parent node, and the IAB-node communicates with the first parent node and the second node through dual connectivity; or
the donor node sends third indication information to the IAB-node, where the third indication information indicates at least one of the following: the mobile IAB authorization status of the IAB-node is authorized; the IAB authorization status of the IAB-node is unauthorized; or the operating mode of the IAB-node is the mobile IAB mode from the mobile IAB mode and the IAB mode.

According to the foregoing technical solution, when the donor node determines that the operating mode of the IAB-node is the mobile IAB mode, the donor node may further perform at least one of the foregoing interactions, so that the IAB-node can subsequently implement communication in the mobile IAB mode based on the at least one of the foregoing interactions.

A fourth aspect of this application provides a communication method. The method is performed by a core network element, the method is performed by a part of components (for example, a processor, a chip, or a chip system) in the core network element, or the method may be implemented by a logical module or software that can implement all or some functions of the core network element. In the fourth aspect and possible implementations of the fourth aspect, an example in which the communication method is performed by the core network element is used for description. In the method, the core network element determines that an operating mode supported by an IAB-node includes a mobile IAB mode; and the core network element determines that an operating mode of the IAB-node is either the mobile IAB mode or an IAB mode.

According to the foregoing technical solution, after the core network element determines that the IAB-node may be an IAB-node supporting the mobile IAB mode and the IAB mode, the core network element may determine that the operating mode of the IAB-node is either the mobile IAB mode or the IAB mode. In other words, when the IAB-node supports the mobile IAB mode and the IAB mode, the core network element may be used as a party of determining the operating mode of the IAB-node, so that either the mobile IAB mode or the IAB mode can be flexibly selected as the operating mode of the IAB-node. Therefore, for the IAB-node supporting the mobile IAB mode and the IAB mode, the operating mode of the IAB-node can be either the mobile IAB mode or the IAB mode through decision of the core network element, to improve communication flexibility of the IAB-node in an IAB network.

It should be noted that the core network element may determine, in a plurality of manners, that the operating mode supported by the IAB-node includes the mobile IAB mode. For example, the core network element may receive capability information from the IAB-node through a donor node, where the capability information may indicate that the IAB-node supports the mobile IAB mode. For another example, the core network element may determine, based on subscription information, that the IAB-node supports the mobile IAB mode.

Optionally, when the operating mode supported by the IAB-node includes the mobile IAB mode, the operating mode supported by the IAB-node may further include the IAB mode. In other words, the IAB-node supporting the mobile IAB mode may also support the IAB mode.

In a possible implementation of the fourth aspect, the method further includes: The core network element sends fifth information to the donor node of the IAB-node, where the fifth information is used to determine that the operating mode of the IAB-node is either the mobile IAB mode or the IAB mode.

According to the foregoing technical solution, after the core network element determines that the operating mode of the IAB-node is either the mobile IAB mode or the IAB mode, the core network element may further send the fifth information to the donor node, so that the donor node determines a decision result of the donor node based on the fifth information.

In a possible implementation of the fourth aspect, how the core network element determines that the operating mode of the IAB-node is either the mobile IAB mode or the IAB mode includes the following manner A and/or manner B.

Manner A: The core network element determines, based on a current time point of the IAB-node and at least one of the following, that the operating mode of the IAB-node is either the mobile IAB mode or the IAB mode: a time range in which the IAB-node is allowed to operate in the mobile IAB mode, a time range in which the IAB-node is allowed to operate in the IAB mode, a time range in which the IAB-node is not allowed to operate in the mobile IAB mode, or a time range in which the IAB-node is not allowed to operate in the IAB mode.

Manner B: The core network element determines, based on space in which the IAB-node is currently located and at least one of the following, that the operating mode of the IAB-node is either the mobile IAB mode or the IAB mode: a space range in which the IAB-node is allowed to operate in the mobile IAB mode, a space range in which the IAB-node is allowed to operate in the IAB mode, a space range in which the IAB-node is not allowed to operate in the mobile IAB mode, or a space range in which the IAB-node is not allowed to operate in the IAB mode.

In a possible implementation of the fourth aspect, that the core network element determines that the operating mode of the IAB-node is either the mobile IAB mode or the IAB mode includes: The core network element determines, based on sixth information, that the operating mode of the IAB-node is either the mobile IAB mode or the IAB mode, where the sixth information is from the donor node of the IAB-node, and the sixth information indicates that the operating mode of the IAB-node is either the mobile IAB mode or the IAB mode.

According to the foregoing technical solution, in a process in which the donor node determines that the operating mode of the IAB-node is either the mobile IAB mode or the IAB mode, a determining basis of the donor node may be the sixth information from the donor node.

Optionally, when the core network element may use mobility state information of the IAB-node as a determining basis, after the core network element receives the mobility state information from the IAB-node through the donor node, for a process in which the core network element determines the operating mode of the IAB-node based on the mobility state information, refer to the foregoing related descriptions of the first aspect and the third aspect.

In a possible implementation of the fourth aspect, when the fifth information includes at least one of the following, the fifth information is used to determine that the operating mode of the IAB-node is the IAB mode:
indication information indicating that an IAB authorization status of the IAB-node is authorized;
indication information indicating that a mobile IAB authorization status of the IAB-node is unauthorized; or
indication information indicating the IAB mode of the IAB-node.

According to the foregoing technical solution, when the core network element determines that the operating mode of the IAB-node is the IAB mode, the fifth information sent by the core network element satisfies any one of the foregoing. Correspondingly, the donor node may determine, based on any one of the foregoing, that the fifth information indicates that the operating mode of the IAB-node is the IAB mode.

In a possible implementation of the fourth aspect, when the fifth information includes at least one of the following, the fifth information is used to determine that the operating mode of the IAB-node is the mobile IAB mode:
indication information indicating that an IAB authorization status of the IAB-node is unauthorized;
indication information indicating that a mobile IAB authorization status of the IAB-node is authorized; or
indication information indicating the mobile IAB mode of the IAB-node.

According to the foregoing technical solution, when the core network element determines that the operating mode of the IAB-node is the mobile IAB mode, the fifth information sent by the core network element satisfies any one of the foregoing. Correspondingly, the donor node may determine, based on any one of the foregoing, that the fifth information indicates that the operating mode of the IAB-node is the mobile IAB mode.

In a possible implementation of the fourth aspect, that the core network element determines that the operating mode of the IAB-node is either the mobile IAB mode or the IAB mode includes: The core network element determines that the operating mode of the IAB-node is the IAB mode; and the method further includes:

The core network element sends second indication information to the IAB-node through the donor node, where the second indication information indicates at least one of the following: the mobile IAB authorization status of the IAB-node is unauthorized; the IAB authorization status of the IAB-node is authorized; or the operating mode of the IAB-node is the IAB mode from the mobile IAB mode and the IAB mode.

According to the foregoing technical solution, when the core network element determines that the operating mode of the IAB-node is the IAB mode, the core network element may further send the second indication information to the IAB-node through the donor node, so that the IAB-node determines, based on the second indication information, that the operating mode of the IAB-node is the IAB mode.

In a possible implementation of the fourth aspect, that the core network element determines that the operating mode of the IAB-node is either the mobile IAB mode or the IAB mode includes: The core network element determines that the operating mode of the IAB-node is the mobile IAB mode; and the method further includes: The core network element sends third indication information to the IAB-node through the donor node, where the third indication information indicates at least one of the following:
the mobile IAB authorization status of the IAB-node is authorized;
the IAB authorization status of the IAB-node is unauthorized; or
the operating mode of the IAB-node is the mobile IAB mode from the mobile IAB mode and the IAB mode.

According to the foregoing technical solution, when the core network element determines that the operating mode of the IAB-node is the mobile IAB mode, the core network element may further send the third indication information to the IAB-node through the donor node, so that the IAB-node determines, based on the third indication information, that the operating mode of the IAB-node is the mobile IAB mode.

A fifth aspect of this application provides a communication apparatus. The apparatus is an IAB-node, the apparatus is a part of components (for example, a processor, a chip, or a chip system) in the IAB-node, or the apparatus may be a logical module or software that can implement all or some functions of the IAB-node. In the fifth aspect and possible implementations of the fifth aspect, an example in which the communication apparatus is the IAB-node is used for description.

The apparatus includes a processing unit. The processing unit is configured to: determine that an RRC connection between an integrated access and backhaul IAB-node and a donor node has not been established, determine that the IAB-node has established the RRC connection to the donor node and that an operating mode of the IAB-node is a mobile IAB mode, or determine that the IAB-node has established the RRC connection to the donor node. The processing unit is further configured to determine that the operating mode of the IAB-node is an IAB mode from the mobile IAB mode and the IAB mode.

In a possible implementation of the fifth aspect, the apparatus further includes a transceiver unit. The transceiver unit is configured to send first information to the donor node, where the first information indicates that the operating mode of the IAB-node is the IAB mode.

In a possible implementation of the fifth aspect, the first information satisfies any one of the following:
the first information includes IAB-node indication information and the first information does not include mobile IAB-node indication information;
the first information includes the IAB-node indication information and the mobile IAB-node indication information;
the first information includes the IAB-node indication information, the mobile IAB-node indication information, and first indication information, where the first indication information indicates that the IAB mode is preferred; or
the first information includes the first indication information.

In a possible implementation of the fifth aspect, the transceiver unit is further configured to receive second information from the donor node, where the second information includes configuration information of an access link of the IAB-node and the second information does not include configuration information of a backhaul link of the IAB-node, and/or the second information indicates that both a mobile IAB authorization status and an IAB authorization status of the IAB-node are unauthorized.

In a possible implementation of the fifth aspect, the transceiver unit is further configured to receive, from the donor node, indication information indicating to release the RRC connection between the IAB-node and the donor node.

In a possible implementation of the fifth aspect, that the processing unit is configured to determine that the operating mode of the IAB-node is the IAB mode from the mobile IAB mode and the IAB mode includes: The processing unit is specifically configured to determine, based on second indication information from the donor node or second indication information from a core network element, that the operating mode of the IAB-node is the IAB mode from the mobile IAB mode and the IAB mode, where
the second indication information indicates at least one of the following:
the mobile IAB authorization status of the IAB-node is unauthorized;
the IAB authorization status of the IAB-node is authorized; or
the operating mode of the IAB-node is the IAB mode from the mobile IAB mode and the IAB mode.

In the fifth aspect of this application, the composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is an IAB-node, the apparatus is a part of components (for example, a processor, a chip, or a chip system) in the IAB-node, or the apparatus may be a logical module or software that can implement all or some functions of the IAB-node. In the sixth aspect and possible implementations of the sixth aspect, an example in which the communication apparatus is the IAB-node is used for description.

The apparatus includes a processing unit. The processing unit is configured to determine that the IAB-node has established an RRC connection to a donor node and that an operating mode of the IAB-node is an IAB mode. The processing unit is further configured to determine that the operating mode of the IAB-node is a mobile IAB mode.

In a possible implementation of the sixth aspect, the apparatus further includes a transceiver unit. The transceiver unit is configured to send third information to the donor node, where the third information indicates that the operating mode of the IAB-node is the mobile IAB mode.

In a possible implementation of the sixth aspect, the third information satisfies any one of the following: the third information includes mobile IAB-node indication information; or the third information includes fourth indication information, where the fourth indication information indicates that the mobile IAB mode is preferred.

In a possible implementation of the sixth aspect, the transceiver unit is further configured to receive fourth information from the donor node, where the fourth information indicates to hand over a child node of the IAB-node to another network device, and/or the fourth information indicates to release a connection between the IAB-node and a first parent node of the IAB-node or release a connection between the IAB-node and a second parent node of the IAB-node, and the IAB-node communicates with the first parent node and the second parent node through dual connectivity.

In a possible implementation of the sixth aspect, that the transceiver unit is configured to determine that the operating mode of the IAB-node is the mobile IAB mode includes: The transceiver unit is specifically configured to determine, based on third indication information from the donor node or third indication information from a core network element, that the operating mode of the IAB-node is the mobile IAB mode, where the third indication information indicates at least one of the following:
a mobile IAB authorization status of the IAB-node is authorized;
an IAB authorization status of the IAB-node is unauthorized; or
the operating mode of the IAB-node is the mobile IAB mode from the mobile IAB mode and the IAB mode.

In the sixth aspect of this application, the composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a donor node, the apparatus is a part of components (for example, a processor, a chip, or a chip system) in the donor node, or the apparatus may be a logical module or software that can implement all or some functions of the donor node. In the seventh aspect and possible implementations of the seventh aspect, an example in which the communication apparatus is the donor node is used for description.

The apparatus includes a transceiver unit and a processing unit. The transceiver unit is configured to receive, from an IAB-node, indication information indicating that the IAB-node supports an operating mode being a mobile IAB mode. The processing unit is configured to determine that the operating mode of the IAB-node is either the mobile IAB mode or an IAB mode.

In a possible implementation of the seventh aspect, that the processing unit is configured to determine that the operating mode of the IAB-node is either the mobile IAB mode or the IAB mode includes: The processing unit is specifically configured to determine that the operating mode of the IAB-node is either the mobile IAB mode or the IAB mode, based on at least one of the following, including: first information from the IAB-node, third information from the IAB-node, fifth information from a core network element, and mobility state information of the IAB-node, where
the first information indicates that the operating mode of the IAB-node is the IAB mode, the third information indicates that the operating mode of the IAB-node is the mobile IAB mode, and the fifth information indicates that the operating mode of the IAB-node is either the mobile IAB mode or the IAB mode.

In a possible implementation of the seventh aspect, the transceiver unit is further configured to send sixth information to the core network element, where the sixth information indicates that the operating mode of the IAB-node is either the mobile IAB mode or the IAB mode.

In a possible implementation of the seventh aspect, when the sixth information indicates that the operating mode of the IAB-node is the IAB mode, the sixth information satisfies any one of the following:
the sixth information includes IAB-node indication information and the sixth information does not include mobile IAB-node indication information;
the sixth information includes the IAB-node indication information and the mobile IAB-node indication information;
the sixth information includes the IAB-node indication information, the mobile IAB-node indication information, and first indication information, where the first indication information indicates that the IAB mode is preferred; or
the sixth information includes the first indication information.

In a possible implementation of the seventh aspect, the transceiver unit is further configured to perform at least one of the following:
sending second information to the IAB-node, where the second information includes configuration information of an access link of the IAB-node and the second information does not include configuration information of a backhaul link of the IAB-node, and/or the second information indicates that both a mobile IAB authorization status and an IAB authorization status of the IAB-node are unauthorized;
sending, to the IAB-node, indication information indicating to release an RRC connection between the IAB-node and the donor node; or
sending second indication information to the IAB-node, where the second indication information indicates at least one of the following:
   the mobile IAB authorization status of the IAB-node is unauthorized;
   the IAB authorization status of the IAB-node is authorized; or
   the operating mode of the IAB-node is the IAB mode from the mobile IAB mode and the IAB mode.

In a possible implementation of the seventh aspect, the transceiver unit is further configured to perform at least one of the following:
sending fourth information to the IAB-node, where the fourth information indicates to hand over a child node of the IAB-node to another node, and/or the fourth information indicates to release a connection between the IAB-node and a first parent node or release a connection between the IAB-node and a second parent node, and the IAB-node communicates with the first parent node and the second node through dual connectivity; or
sending third indication information to the IAB-node, where the third indication information indicates at least one of the following:
   the mobile IAB authorization status of the IAB-node is authorized;
   an IAB authorization status of the IAB-node is unauthorized; or
   the operating mode of the IAB-node is the mobile IAB mode from the mobile IAB mode and the IAB mode.

In the seventh aspect of this application, the composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a core network element, the apparatus is a part of components (for example, a processor, a chip, or a chip system) in the core network element, or the apparatus may be a logical module or software that can implement all or some functions of the core network element. In the eighth aspect and possible implementations of the eighth aspect, an example in which the communication apparatus is the core network element is used for description.

The apparatus includes a processing unit. The processing unit is configured to determine that an operating mode supported by an IAB-node includes a mobile IAB mode. The processing unit is further configured to determine that an operating mode of the IAB-node is either the mobile IAB mode or an IAB mode.

In a possible implementation of the eighth aspect, the transceiver unit is further configured to send fifth information to a donor node of the IAB-node, where the fifth information is used to determine that the operating mode of the IAB-node is either the mobile IAB mode or the IAB mode.

In a possible implementation of the eighth aspect, that the processing unit is configured to determine that the operating mode of the IAB-node is either the mobile IAB mode or the IAB mode includes: The processing unit is specifically configured to determine, based on sixth information, that the operating mode of the IAB-node is either the mobile IAB mode or the IAB mode, where the sixth information is from the donor node of the IAB-node, and the sixth information indicates that the operating mode of the IAB-node is either the mobile IAB mode or the IAB mode.

In a possible implementation of the eighth aspect, when the fifth information includes at least one of the following, the fifth information is used to determine that the operating mode of the IAB-node is the IAB mode:
indication information indicating that an IAB authorization status of the IAB-node is authorized;
indication information indicating that a mobile IAB authorization status of the IAB-node is unauthorized; or
indication information indicating the IAB mode of the IAB-node.

In a possible implementation of the eighth aspect, when the fifth information includes at least one of the following, the fifth information is used to determine that the operating mode of the IAB-node is the mobile IAB mode:
indication information indicating that the IAB authorization status of the IAB-node is unauthorized;
indication information indicating that the mobile IAB authorization status of the IAB-node is authorized; or
indication information indicating the mobile IAB mode of the IAB-node.

In a possible implementation of the eighth aspect, that the processing unit is configured to determine that the operating mode of the IAB-node is either the mobile IAB mode or the IAB mode includes: The processing unit is specifically configured to determine that the operating mode of the IAB-node is the IAB mode.

The transceiver unit is further configured to send second indication information to the IAB-node through the donor node, where the second indication information indicates at least one of the following:
the mobile IAB authorization status of the IAB-node is unauthorized;
the IAB authorization status of the IAB-node is authorized; or
the operating mode of the IAB-node is the IAB mode from the mobile IAB mode and the IAB mode.

In a possible implementation of the eighth aspect, that the processing unit is configured to determine that the operating mode of the IAB-node is either the mobile IAB mode or the IAB mode includes: The processing unit is specifically configured to determine that the operating mode of the IAB-node is the mobile IAB mode. The transceiver unit is further configured to send third indication information to the IAB-node through the donor node, where the third indication information indicates at least one of the following:
the mobile IAB authorization status of the IAB-node is authorized;
an IAB authorization status of the IAB-node is unauthorized; or
the operating mode of the IAB-node is the mobile IAB mode from the mobile IAB mode and the IAB mode.

In the eighth aspect of this application, the composition module of the communication apparatus may be further configured to perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is configured to execute a program or instructions in a memory, to cause the apparatus to implement the method performed in the possible implementations of any one of the first aspect to the fourth aspect.

A tenth aspect of this application provides a communication apparatus, including at least one logic circuit and an input/output interface. The logic circuit is configured to perform the method performed in the possible implementations of any one of the first aspect to the fourth aspect.

An eleventh aspect of this application provides a computer-readable storage medium. The storage medium is configured to store one or more computer-executable instructions. When the computer-executable instructions are executed by a processor, the processor performs the method in the possible implementations of any one of the first aspect to the fourth aspect.

A twelfth aspect of this application provides a computer program product. When a computer program in the computer program product is executed by a processor, the processor performs the method performed in the possible implementations of any one of the first aspect to the fourth aspect.

A thirteenth aspect of this application provides a chip system. The chip system includes at least one processor, configured to support a communication apparatus in implementing the method performed in the possible implementations of any one of the first aspect to the fourth aspect.

In a possible design, the chip system may further include a memory. The memory is configured to store program instructions and data that are necessary for the first communication apparatus. The chip system may include a chip, or may include a chip and another discrete device. Optionally, the chip system further includes an interface circuit, and the interface circuit provides program instructions and/or data for the at least one processor.

A fourteenth aspect of this application provides a communication system. The communication system includes at least two devices of the IAB-node, the donor node, and the core network element in any one of the foregoing aspects and the implementations of the foregoing aspects.

It should be understood that, for technical effects brought by any design manner in the fifth aspect to the fourteenth aspect, refer to the technical effects brought by different design manners in the first aspect to the fourth aspect. Details are not described herein again.

### BRIEF DESCRIPTION OF DRAWINGS

FIG. 1 is a diagram of a communication system according to this application;
FIG. 2a is a diagram of an IAB communication scenario according to this application;
FIG. 2b is another diagram of an IAB communication scenario according to this application;
FIG. 2c is a diagram of an IAB communication protocol stack according to this application;
FIG. 2d is another diagram of an IAB communication protocol stack according to this application;
FIG. 2e is a diagram of an IAB network access procedure according to this application;
FIG. 2f is a diagram of IAB-node migration;
FIG. 2g is another diagram of IAB-node migration;
FIG. 2h is another diagram of IAB-node migration;
FIG. 3 is a diagram of a communication method according to this application;
FIG. 4 is another diagram of a communication method according to this application;
FIG. 5 is another diagram of a communication method according to this application;
FIG. 6 is another diagram of a communication method according to this application;
FIG. 7 is a diagram of a communication apparatus according to this application;
FIG. 8 is another diagram of a communication apparatus according to this application; and
FIG. 9 is another diagram of a communication apparatus according to this application.

### DESCRIPTION OF EMBODIMENTS

First, some terms that may be used in embodiments of this application are described.
(1) Configuration and pre-configuration: In this application, both configuration and pre-configuration are used. Configuration means that a network device like a base station or a server sends configuration information of some parameters or values of parameters to a terminal by using a message or signaling, so that the terminal determines a communication parameter or a transmission resource based on the values or the information. Similar to configuration, pre-configuration may be a manner in which a network device like a base station or a server sends parameter information or values to a terminal through a communication link or a carrier; or may be a manner of defining a corresponding parameter or parameter value in a standard, or a manner of setting a related parameter or value in a terminal device in advance. This is not limited in this application. Further, these values and parameters may be changed or updated.
(2) In this application, "indicating" may include direct indicating and indirect indicating. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example, but not limited to one or a combination of at least two of RRC signaling, medium access control (medium access control, MAC) layer signaling, and physical layer signaling. The MAC layer signaling includes, for example, a medium access control control element (medium access control control element, MAC CE). The physical layer signaling includes, for example, downlink control information (downlink control information, DCI).

(3) The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In addition, in this application, unless otherwise specified, mutual reference may be made between same or similar parts of embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

(4) "Sending" and "receiving" in embodiments of this application represent signal transmission directions. For example, a communication process between an entity A and an entity B is used as an example. In this application, that the entity A sends information to the entity B may be that A directly sends the information to B, or may be that A indirectly sends the information to B through another entity. Similarly, that the entity B receives information from the entity A may be that the entity B directly receives the information sent by the entity A, or may be that the entity B indirectly receives, through another entity, the information sent by the entity A. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. "Sending" may alternatively be understood as "outputting" of a chip interface, and "receiving" may alternatively be understood as "inputting" of the chip interface.

In this application, unless otherwise specified, mutual reference may be made between same or similar parts of embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

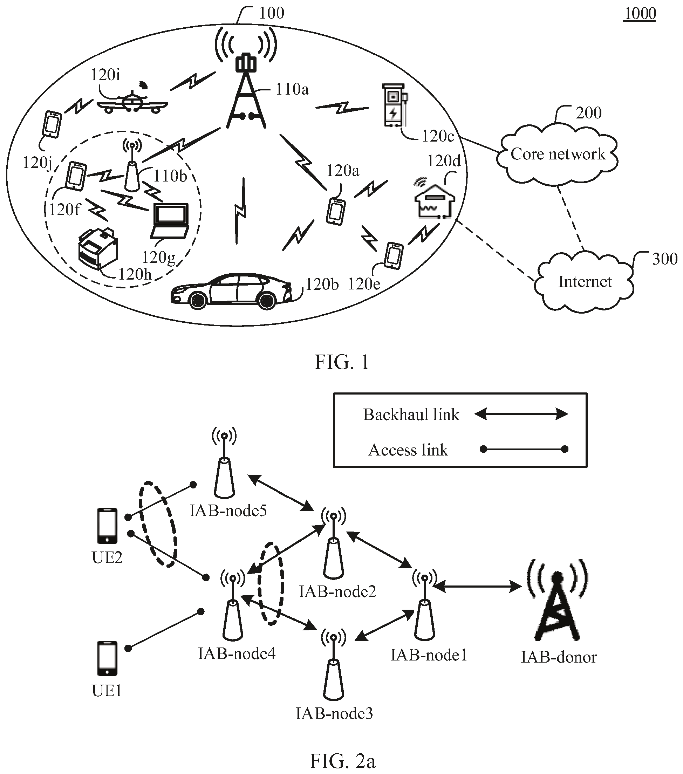

FIG. 1 is a diagram of an architecture of a communication system 1000 to which an embodiment of this application is applied.

As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, an NR system, and a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a MAC layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application.

For ease of description, the following uses a base station as an example of the RAN node for description. It may be understood that, when the communication system includes an IAB network, the base station (namely, the RAN node) may be an IAB-node.

The terminal is a device having a wireless transceiver function, and may send a signal to the base station or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be located at fixed positions, or may be mobile. The base station and the terminal may be deployed on land, where the deployment includes indoor or outdoor, or hand-held or vehicle-mounted deployment; may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed on a licensed spectrum, may be performed on an unlicensed spectrum, or may be performed on both a licensed spectrum and an unlicensed spectrum. Communication may be performed on a spectrum below 6 gigahertz (gigahertz, GHz), may be performed on a spectrum above 6 GHz, or may be performed on both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, for example, smart grid, industrial control, smart transportation, and smart city. A function of the terminal may alternatively be performed by a module (for example, a chip or a modem) in the terminal, or may be performed by an apparatus including the function of the terminal.

It should be understood that this application may be applied to a long term evolution (long term evolution, LTE) system, a new radio (new radio, NR) system, or a communication system (for example, 6G) evolved after 5G. The communication system includes a network device and a terminal device.

In the communication system shown in FIG. 1, an IAB technology enables a wireless transmission solution to be used for both an access link (Access Link) and a backhaul link (Backhaul Link), which can reduce fiber deployment, and also can satisfy a network capacity improvement, a requirement for wider coverage, an ultra-reliable and ultra-low latency, and the like.

In an IAB network, a relay node, or referred to as an IAB-node (IAB-node), may provide a wireless access service for a terminal device, and service data of the terminal device is transmitted by the IAB-node by connecting to an IAB-donor (IAB-donor) through a wireless backhaul link. The IAB-node includes an MT part and a DU part. When being oriented to a parent node of the IAB-node, the IAB-node may serve as a terminal device, that is, a role of the MT. When being oriented to a child node of the IAB-node (the child node may be another IAB-node, or a common terminal device), the IAB-node may serve as a network device, that is, a role of the DU. The IAB-donor is an access network element having a complete base station (for example, gNB) function, and includes a CU and a DU. The IAB-donor is connected to a core network (for example, connected to a 5G core network) that serves the terminal device.

The following describes the IAB network with reference to implementation examples shown in FIG. 2a to FIG. 2h.

FIG. 2a is a diagram of an IAB network.

In the IAB network shown in FIG. 2a, terminal devices include UE1 and UE2, and IAB-nodes include an IAB-node1 (IAB-node1) to an IAB-node5 (IAB-node5) and an IAB-donor (donor) node. One or more IAB-nodes may be included on one transmission path between any UE and the IAB-donor. Each IAB-node needs to maintain a wireless backhaul link oriented to a parent node, and further needs to maintain a radio link oriented to a child node. If the child node of the IAB-node is a terminal device (for example, the UE1 or the UE2 in FIG. 2a), there is a wireless access link between the IAB-node and the child node (namely, the UE). If the child node of the IAB-node is another IAB-node, there is a wireless backhaul link between the IAB-node and the child node (namely, the another IAB-node). For example, refer to FIG. 2a. In a path "UE1→IAB-node4→IAB-node3→IAB-node1→IAB-donor", the UE1 accesses the IAB-node 4 through a wireless access link, the IAB-node4 is connected to the IAB-node3 through a wireless backhaul link, the IAB-node3 is connected to the IAB-node1 through a wireless backhaul link, and the IAB-node1 is connected to the IAB-donor through a wireless backhaul link.

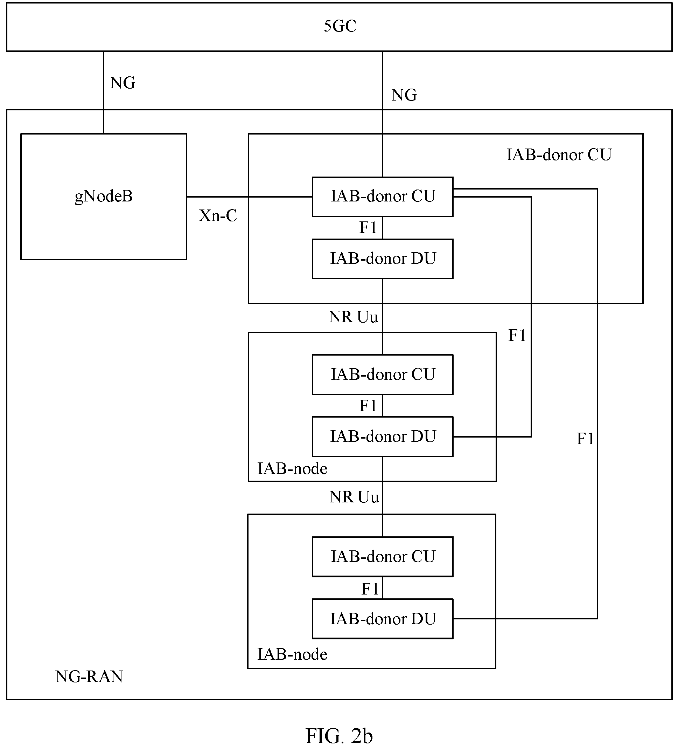

FIG. 2b is a diagram in which a wireless relay scenario is implemented through standalone (standalone, SA) networking.

As shown in FIG. 2b, communication nodes include a 5G core (5G core, 5GC), a 5G access network device (denoted as a gNodeB in the figure), an IAB-donor, and one or more IAB-nodes. In FIG. 2b, an IAB-node DU (briefly referred to as an IAB-DU below) is logically connected to an IAB-donor CU (briefly referred to as a CU below) through an F1 interface. Actually, the connection between the IAB-DU and the CU is implemented through an NR Uu interface between an IAB-node MT of each hop and a parent node DU. However, because the IAB-DU can finally communicate with the CU, it may be considered that there is an F1 interface logically.

For example, the F1 interface may be used to support a user plane protocol (F1-user plane, F1-U) and a control plane protocol (F1-control plane, F1-C).

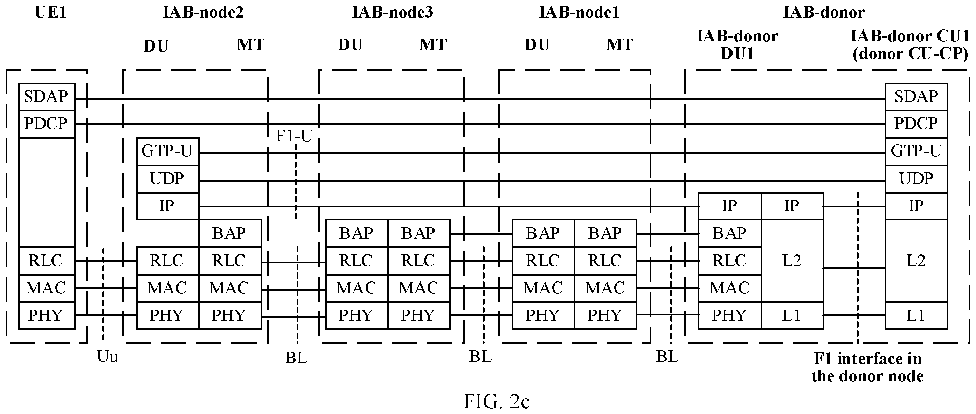

For example, as shown in FIG. 2c, the F1-U includes one or more of the following protocol layers: a general packet radio service tunneling protocol-user plane (general packet radio service tunneling protocol-user plane, GTP-U), a user datagram protocol (user datagram protocol, UDP), an internet protocol (internet protocol, IP), and another protocol layer. According to the F1-U, functions such as user plane data transmission and downlink transmission status feedback may be performed between an IAB-donor and an IAB-node.

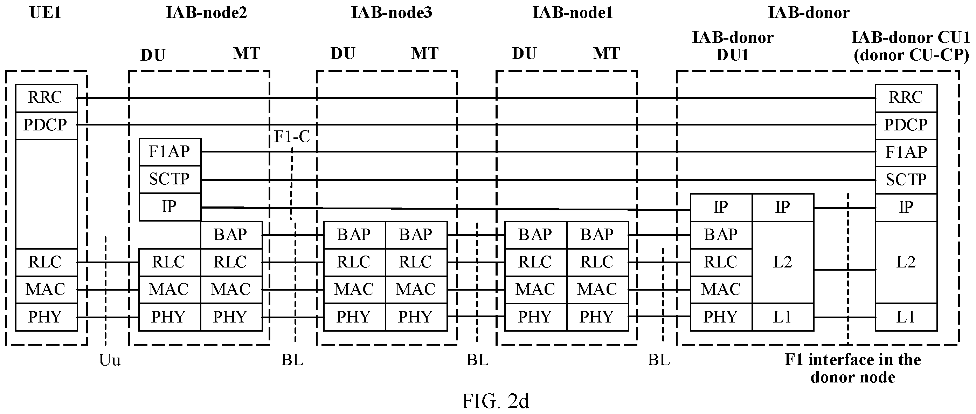

For another example, as shown in FIG. 2d, the F1-C includes one or more of the following: an F1 application protocol (F1 application protocol, F1AP), a stream control transport protocol (stream control transport protocol, SCTP), IP, and another protocol layer. According to the F1-C, interface management, IAB-DU management, UE context related configuration, and the like may be performed between an IAB-donor and an IAB-node.

It should be understood that, in FIG. 2c and FIG. 2d, UE communicates with the IAB-node through a Uu interface, and different IAB-nodes communicate with each other through a backhaul link (backhaul link, BL).

FIG. 2e below describes a process of IAB-node network access (IAB integration). For example, in FIG. 2e, a network access process of an IAB-node2 is used as an example, and an IAB-node1 is a parent node of the IAB-node2 and has accessed a network.

A network access procedure of the IAB-node may be summarized as follows:

Step 1: For a cell supporting an IAB function, an iab-support information element may be broadcast in a SIB1. An IAB-MT in an IAB-node supporting an IAB mode selects a cell, that has the iab-support information element, in the SIB1 for access, sets up an RRC connection to a donor, and indicates, when setting up the RRC connection, that the IAB-MT is an IAB-node (an IAB-node indication is carried in an RRCSetupComplete message). When a donor-CU sends an initial UE message (INITIAL UE MESSAGE) to a core network (which may be specifically an AMF network element in the core network), the IAB-node indication is also carried. The AMF performs authentication (Authentication) on the IAB-MT, includes an IAB Authorized information element in a message (INITIAL CONTEXT SETUP REQUEST) indicating the donor-CU to set up a UE initial context related to the IAB-MT, and performs authorization (Authorization) on the IAB-node. If the authentication succeeds, a value of IAB Authorized is authorized (authorized); otherwise, the value of IAB Authorized is unauthorized (not authorized).

Optionally, for a cell supporting a mobile integrated access and backhaul (mobile integrated access and backhaul, mobile IAB-node, or mIAB) function, a mobile iab-support information element may be broadcast in the SIB1. Similarly, an IAB-MT in an IAB-node supporting a mobile IAB mode may select a cell, that has the mobile iab-support information element, in the SIB1 for access, and sets up an RRC connection to the donor. For a subsequent execution process of the AMF network element in the core network, refer to the foregoing processing process of the IAB mode.

The network access procedure of the IAB-node is described herein. In this case, based on an assumption that the value of IAB Authorized is authorized, and subsequent steps are performed.

Step 2-1: The donor-CU configures a backhaul link RLC channel (BH RLC Channel) for the IAB-node by using an RRC message, and configures a route. Specifically, in this case, only one default (default) BH RLC channel and a default route are configured, for use during initial setup of an F1 interface subsequently (for example, in step 3). After the F1 interface has been set up, more BH RLC channels and routing paths may be configured for the IAB-node by using a F1-C message, for use of more F1-C messages and F1-U user plane data subsequently.

Step 2-2: In addition to configuring the IAB-node2 in step 2-1, routing update may be further performed on a node (the IAB-node1) between the IAB-node and the donor in step 2-2, to notify these nodes of how to select a next-hop link and a next-hop RLC channel when receiving a data packet from the IAB-node2 or a data packet to be sent to the IAB-node2.

Step 3: An IAB-DU2 in the IAB-node2 sends an F1 SETUP REQUEST message to the donor-CU by using the default configuration obtained in step 2-1, where the message carries configuration information of a cell served by the DU2 and is used to request to set up the F1 interface. The donor-CU returns an F1 SETUP RESPONSE to the IAB-DU2 to activate the cell. The setup of the F1 interface is completed. In this case, the IAB-node2 is activated, and may provide a service for a terminal device and/or a next-hop IAB-MT.

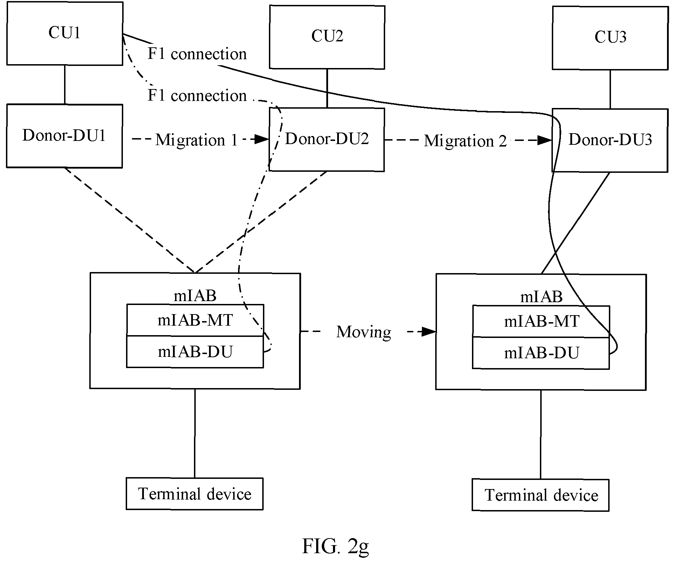

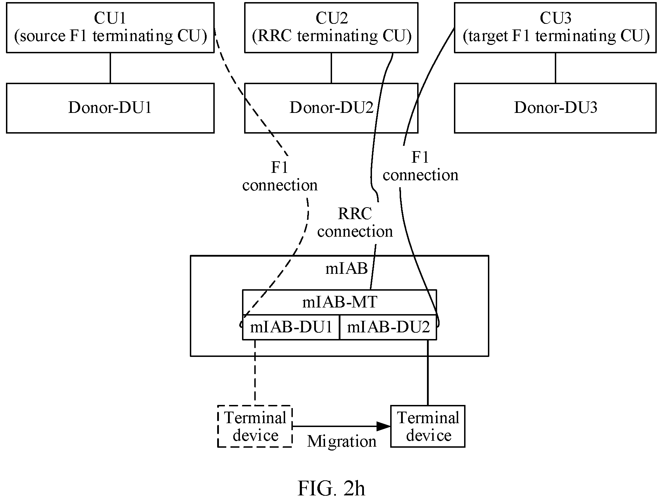

FIG. 2f, FIG. 2g, and FIG. 2h below describe IAB-node migration processes.

FIG. 2f shows an implementation example of partial migration (Partial migration) of an IAB-node. In FIG. 2f, an IAB-node on which migration is performed may be referred to as a boundary node (boundary node), for example, a mobile integrated access and backhaul (mobile integrated access and backhaul, mIAB) in the figure.

In FIG. 2f, before the partial migration is performed, an RRC connection exists between an MT (denoted as mIAB-MT) in the mIAB and a CU1, an F1 interface exists between a DU (denoted as mIAB-DU) in the mIAB and the CU1, and communication is performed through a source path (mIAB-DU↔mIAB-MT↔donor-DU1↔CU1).

In FIG. 2f, during the partial migration, inter-CU cell handover is performed on the mIAB-MT, and an RRC connection to a CU2 is established. However, to avoid introducing an F1 interface re-setup process, the mIAB-DU still maintains the F1 interface with the CU1, and an F1 interface is not set up between the mIAB-DU and the CU2. Therefore, a communication path between the CU1 and the mIAB-DU becomes inter-topology: CU1↔donor-DU2↔mIAB-MT↔mIAB-DU.

Optionally, in FIG. 2f, the CU1 and the CU2 are respectively referred to as an F1-terminating CU and a non-F1-terminating CU (or an RRC terminating CU), and may also be referred to as a source CU and a target CU. It should be noted that data does not pass through the CU2 when transmission of the data is performed on the inter-topology path, and the CU1 and the donor-DU2 directly communicate with each other through an IP network.

In addition, in FIG. 2f, when there is traffic transmission between the CU1 and UE, the CU1 may send an IAB TRANSPORT MIGRATION MANAGEMENT REQUEST message to the CU2. A function of the message is to enable the CU2 to help the CU1 transmit traffic between the CU1 and the UE. In other words, the F1 terminating CU sends the IAB TRANSPORT MIGRATION MANAGEMENT REQUEST message to the non-F1-terminating CU, to request to set up inter-topology traffic transmission. If the non-F1-terminating CU agrees with the setup, the non-F1-terminating CU replies the F1 terminating CU with an IAB TRANSPORT MIGRATION MANAGEMENT RESPONSE message. If the non-F1-terminating CU does not agree with the setup, the non-F1-terminating CU replies with an IAB TRANSPORT MIGRATION MANAGEMENT REJECT message. If the F1 terminating CU or non-F1-terminating CU subsequently wants to perform an operation like QoS modification or withdrawal on traffic, an IAB TRANSPORT MIGRATION MODIFICATION REQUEST/RESPONSE message may be further exchanged.

FIG. 2g shows an implementation example of consecutive partial migration (consecutive partial migration) of an IAB-node. In FIG. 2G, migration of an mIAB-node may be migration generated due to moving (moving) of the mIAB-node.

In FIG. 2g, migration 1 indicates a migration process, shown in FIG. 2g, of migrating from a source communication path (mIAB-DU↔mIAB-MT↔donor-DU1↔CU1) to a target communication path (mIAB-DU↔mIAB-MT↔donor-DU2↔CU1) between the mIAB-DU and the CU1.

After the migration 1, the mIAB-DU may perform a next migration process, namely, a process of migration 2. In other words, the mIAB-MT is handed over from a CU2 to a CU3, but an F1 interface of the DU is always associated with the CU1. As shown in FIG. 2g, the mIAB-node is directly connected to a donor-DU, but this is not limited. There may be another IAB-node between the mIAB-node and the donor-DU. In addition, for how the MT is connected to the CU 2, the MT may be handed over from the CU 1 to the CU 2, or may be handed over from another CU to the CU 2 (which is not shown in the figure, but may be understood with reference to the following DU migration scenario).

FIG. 2h shows an implementation example of DU migration (DU migration) of an IAB-node.

In consideration of extensive mobility of the IAB-node (for example, an mIAB-node), when the mIAB-node moves far away, it may be difficult for an mIAB-DU to still maintain an IP connection to an initial CU, or a transmission latency is significantly high. Therefore, the DU migration can be introduced to support extensive movement. As shown in FIG. 2h, an MT may consistently remain an RRC connection to a CU 2, and an F1 interface of a DU is migrated from a CU 1 to a CU 3. The figure shows an mIAB-DU 1 and an mIAB-DU 2, which are two logical DUs on a physical DU. The DU migration is implemented in the following manner: It is assumed that a source DU is the mIAB-DU 1. The mIAB-node generates a new logical DU: the mIAB-DU 2, and the mIAB-DU 2 sets up an F1 interface with the CU 3. In this case, the CU 1 sends a handover request of a terminal device to the CU 3 to hand over the terminal device from a cell served by the mIAB-DU 1 to a cell served by the mIAB-DU 2, and then, the CU 1 releases an F1 interface with the mIAB-DU 1. In this way, the DU migration has been completed.

It can be learned from the foregoing descriptions of the IAB network that, the IAB network may include an IAB-donor node (IAB-donor node) and an IAB-node (IAB-node). The IAB-node may implement data transmission through a communication connection to the donor node. In addition, the IAB-node may have a plurality of operating modes, including an IAB mode and a mobile IAB mode. The two operating modes may be different.

In an implementation example, compared with the IAB mode, the mobile IAB mode supports more features, including but not limited to one or more of the partial migration described in FIG. 2f, the consecutive partial migration described in FIG. 2g, and the DU migration described in FIG. 2h. In other words, the IAB-node in the IAB mode does not support the one or more features.

In another implementation example, compared with the IAB mode, some features are further reduced (disabled) for the mobile IAB mode. For example, the mobile IAB mode does not support the IAB-node being connected to different cells through dual connectivity, but the IAB mode supports the IAB-node being connected to different cells through dual connectivity. For another example, the IAB mode supports another IAB-node being connected to the IAB-node (in other words, a child node of the IAB-node in the IAB mode may be an IAB-node), and the mobile IAB mode does not support another IAB-node being connected to the IAB-node (in other words, a child node of the IAB-node in the mobile IAB mode cannot be an IAB-node).

It can be learned from step 1 shown in FIG. 2e that, when system broadcast information of a parent node carries an iab-support information element but does not carry a mobile iab-support information element, if the IAB-node supports the mobile IAB mode and the IAB mode, the IAB-node may access the parent node, and the IAB-node operates in the IAB mode. Similarly, when the system broadcast information of the parent node carries the mobile iab-support information element, if the IAB-node supports the mobile IAB mode and the IAB mode, the IAB-node may access the parent node, and the IAB-node operates in the mobile IAB mode.

In other words, a decision basis for determining whether the operating mode of the IAB-node is the IAB mode or the mobile IAB mode is whether the system broadcast information of the parent node carries the mobile iab-support information element. If the mobile iab-support information element is carried, the IAB-node operates in the mobile IAB mode after accessing the parent node. If the mobile iab-support information element is not carried, the IAB-node operates in the IAB mode after accessing the parent node.

However, in the IAB network, the foregoing manner of determining the operating mode of the IAB-node depends on whether the parent node broadcasts the mobile iab-support information element is limited.

For example, energy consumption of the IAB-node operating in the mobile IAB mode may be different from that of the IAB-node operating in the IAB mode. Usually, because the mobile IAB mode supports more features (for example, the migration features described in FIG. 2f to FIG. 2h), it is possible that the energy consumption corresponding to the mobile IAB mode is greater than the energy consumption corresponding to the IAB mode. Therefore, the IAB-node may need to use energy state information of the IAB-node as a determining basis for determining that the operating mode is the IAB mode, so that the operating mode of the IAB-node can adapt to the energy state information of the IAB-node.

For another example, node movement corresponding to the IAB-node operating in the mobile IAB mode may be different from that corresponding to the IAB-node operating in the IAB mode. Usually, the mobile IAB mode may support high-speed movement, and the IAB mode may support low-speed movement or non-movement (or may not support high-speed movement). Therefore, the IAB-node or a network device (for example, a donor node or a core network element) connected to the IAB-node may need to use mobility state information of the IAB-node as a determining basis for determining that the operating mode is the IAB mode, so that the operating mode of the IAB-node can adapt to the mobility state information of the IAB-node.

In conclusion, a current manner of determining the operating mode of the IAB-node depends on whether the parent node of the IAB-node broadcasts the mobile iab-support information element is limited. Therefore, how to improve communication flexibility of the IAB-node is an urgent technical problem to be resolved.

To resolve the foregoing problem, this application provides a communication method and a related device, used in an implementation in which, when an IAB-node supports a mobile IAB mode and an IAB mode, the IAB-node, a donor node, or a core network element is used as a party of determining an operating mode of the IAB-node, so that either the mobile IAB mode or the IAB mode can be flexibly selected as the operating mode of the IAB-node, to improve communication flexibility of the IAB-node in an IAB network. Detailed descriptions are provided below with reference to the accompanying drawings.

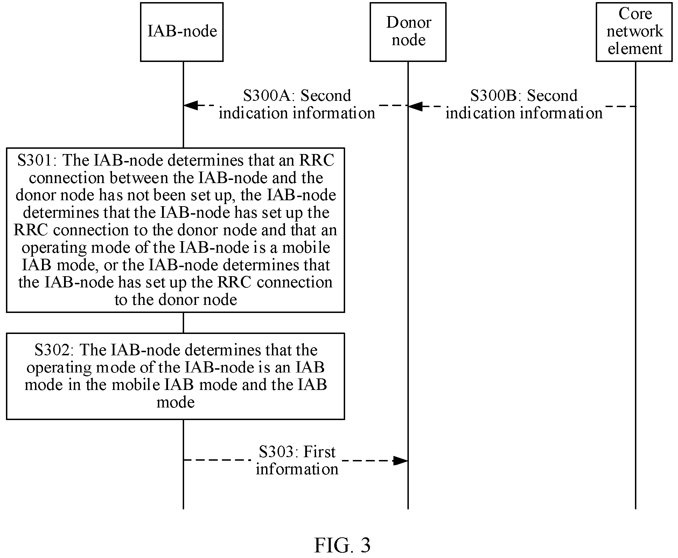

FIG. 3 is a diagram of a communication method according to this application. The method includes the following steps.

It should be noted that, in implementation processes shown in FIG. 3 to FIG. 6, an example in which an IAB-node, a donor node, and a core network element are used as execution bodies of the interaction diagram to illustrate the method. However, the execution bodies of the interaction diagram are not limited in this application. For example, the method performed by the IAB-node may alternatively be performed by a module (for example, a chip, a chip system, or a processor) of the IAB-node, or may be implemented by a logical node, a logical module, or software that can implement all or part of the IAB-node. The method performed by the donor node may alternatively be performed by a module (for example, a chip, a chip system, or a processor) of the donor node, or may be implemented by a logical node, a logical module, or software that can implement all or part of the functions of the donor node. The method performed by the core network element may alternatively be performed by a module (for example, a chip, a chip system, or a processor) of the core network element, or may be implemented by a logical node, a logical module, or software that can implement all or part of the functions of the core network element.

It should be understood that in the implementation processes shown in FIG. 3 to FIG. 6, the core network element may be a network element for an access management function and/or a mobility management function. For example, a name of the core network element may be an access and mobility management function (access and mobility management function, AMF) network element, or with evolution of a standard or a technology, the name of the core network element may be another description. This is not limited herein.

S301: An IAB-node determines that an RRC connection between the IAB-node and a donor node has not been established, the IAB-node determines that the IAB-node has established the RRC connection to the donor node and that an operating mode of the IAB-node is a mobile (mobile) IAB mode, or the IAB-node determines that the IAB-node has established the RRC connection to the donor node.

S302: The IAB-node determines that the operating mode of the IAB-node is an IAB mode from the mobile IAB mode and the IAB mode.

It should be understood that an RRC establishment procedure between the IAB-node and the donor node may include exchange of a plurality of pieces of information, for example, a message 1 (message 1, MSG1), a message 2 (message 2, MSG2), a message 3 (message 3, MSG3), a message 4 (message 4, MSG4), a message 5 (message 5, MSG5), a message A (message A, MSGA), and a message B (message B, MSGB). Usually, after the IAB-node sends the MSG5 to the donor node in step S301, the IAB-node may determine that the RRC connection between the IAB-node and the donor node has been established. Correspondingly, before the IAB-node sends the MSG5 to the donor node, the IAB-node may determine that the RRC connection between the IAB-node and the donor node has not been established.

Optionally, the MSG5 may indicate that the RRC has been established. Correspondingly, the MSG5 may be replaced with another description, for example, an RRC connection setup complete message.

It should be understood that the IAB-node includes a mobile terminal (mobile terminal, MT) and a distributed unit (distributed unit, DU). Usually, when the IAB-node operates in the IAB mode, the MT and the DU are connected to a same donor node. When the IAB-node operates in the mobile IAB mode, the MT and the DU may be connected to a same donor node, or may be connected to different donor nodes. In any one of the foregoing cases in which the RRC connection between the IAB-node and the donor node has not been established, the IAB-node has established the RRC connection to the donor node and the operating mode of the IAB-node is the mobile (mobile) IAB mode, or the IAB-node has established the RRC connection to the donor node, the related donor node is a donor node connected to the MT in the IAB-node.

Optionally, the donor node connected to the MT may be referred to as a non-F1-terminating central unit (non-F1-terminating donor), a radio resource control terminating central unit (RRC terminating donor), or the like. Correspondingly, the donor node connected to the DU may be referred to as an F1 terminating central unit (F1-terminating donor), a non-radio resource control terminating central unit (non-RRC-terminating donor), or the like.

In a possible implementation, in step S302, the IAB-node may use locally obtained information as a determining basis for determining that the operating mode is the IAB mode.

In an implementation example, energy consumption of the IAB-node operating in the mobile IAB mode may be different from that of the IAB-node operating in the IAB mode. Usually, because the mobile IAB mode supports more features (for example, the migration features described in FIG. 2f to FIG. 2h below), it is possible that the energy consumption corresponding to the mobile IAB mode is greater than the energy consumption corresponding to the IAB mode. Therefore, the IAB-node may use energy state information of the IAB-node as the determining basis for determining that the operating mode is the IAB mode. For example, when the energy state information of the IAB-node indicates that energy load of the IAB-node is greater than a threshold (or remaining energy is less than a threshold), the IAB-node may determine that the operating mode is the IAB mode.

In another implementation example, node movement corresponding to the IAB-node operating in the mobile IAB mode may be different from that corresponding to the IAB-node operating in the IAB mode. Usually, the mobile IAB mode may support high-speed movement, and the IAB mode may support low-speed movement or non-movement (or may not support high-speed movement). Therefore, the IAB-node may use mobility state information of the IAB-node as the determining basis for determining that the operating mode is the IAB mode. For example, when the mobility state information of the IAB-node indicates that a moving speed of the IAB-node is less than a threshold, the IAB-node may determine that the operating mode is the IAB mode. Alternatively, the mobility state information may be determined based on a quantity of cell reselections and/or handovers of the IAB-MT in a period of time. When the quantity of cell reselections and/or handovers of the IAB-MT in the period of time is greater than a threshold, the IAB-node determines that the operating mode is the mobile IAB mode. When the quantity of cell reselections and/or handovers of the IAB-MT in the period of time is less than or equal to the threshold, the IAB-node determines that the operating mode is the IAB mode.

In another implementation example, a parent node corresponding to the IAB-node operating in the mobile IAB mode may be different from that corresponding to the IAB-node operating in the IAB mode. For example, some parent nodes support only nodes that access the mobile IAB mode (denoted as first-type parent nodes), some parent nodes support only nodes that access the IAB mode (denoted as second-type parent nodes), and some parent nodes support nodes that access the mobile IAB mode and nodes that access the IAB mode (denoted as third-type parent nodes). Usually, the parent node may broadcast, in system broadcast information, indication information of a node supporting access to the mobile IAB mode. For example, indication information sent by the first-type parent node and/or indication information sent by the third-type parent node may be a mobile IAB-support (mobile iab-support) information element carried in a system information block (system information block, SIB)1, and indication information sent by the second-type parent node may be an IAB-support (iab-support) information element carried in the SIB1. Because the IAB-node may need to provide a network service for a child node through an access link, the IAB-node usually accesses a parent node with good signal quality. Correspondingly, the IAB-node may use signal quality information of the first-type parent node and/or signal quality information of the third-type parent node as the determining basis for determining that the operating mode is the IAB mode. For example, when signal quality corresponding to the signal quality information of the first-type parent node and/or signal quality corresponding to the signal quality information of the third-type parent node are/is less than a threshold, the IAB-node may determine that the IAB-node currently in the mobile IAB mode may not obtain a high-quality communication service. Therefore, the IAB-node may determine that the operating mode is the IAB mode, access the second-type parent node, and obtain a communication service through the second-type parent node. Correspondingly, when the signal quality corresponding to the signal quality information of the first-type parent node or the third-type parent node is not less than the threshold, the IAB-node determines that the operating mode is the mobile IAB mode, accesses the first-type parent node or the third-type parent node, and obtains a communication service through the first-type parent node or the third-type parent node.

In a possible implementation, in step S302, the IAB-node may determine, as indicated by another node, that the operating mode is the IAB mode.

In an implementation instance, in the technical solution shown in FIG. 3, before step S301, the following step may be further included:

S300A: The donor node sends second indication information to the IAB-node, in other words, the second indication information may be carried in an access stratum (access stratum, AS) message.

In an implementation instance, in the technical solution shown in FIG. 3, before step S301, the following steps may be further included:

S300B: A core network device sends second indication information to the donor node.

S300A: The donor node sends the second indication information to the IAB-node, in other words, the second indication information may be carried in a non-access stratum (non-access stratum, NAS) message.

In other words, in step S302, that the IAB-node determines that the operating mode of the IAB-node is the IAB mode from the mobile IAB mode and the IAB mode includes: The IAB-node determines, based on the second indication information from the donor node or the second indication information from the core network element, that the operating mode of the IAB-node is the IAB mode from the mobile IAB mode and the IAB mode.

The second indication information indicates at least one of the following information A to information C:
information A: a mobile IAB authorization status of the IAB-node is unauthorized;
information B: an IAB authorization status of the IAB-node is authorized; or
information C: the operating mode of the IAB-node is the IAB mode from the mobile IAB mode and the IAB mode.

In an implementation example, for example, the second indication information is carried in a NAS message. In step S300A, the information A received by the donor node may be implemented by setting a value of mobile IAB authorized in the NAS message to unauthorized (not authorized), the information B received by the donor node may be implemented by setting a value of IAB authorized in the NAS message to authorized (authorized), and the information C received by the donor node may be implemented by using a newly added information element in the NAS message, where the information element indicates that the operating mode of the IAB-node is the IAB mode from the mobile IAB mode and the IAB mode.

In another implementation example, for example, the second indication information is carried in an AS message. The donor node may include at least one of the foregoing information A to the information C in an RRC message. In a possible implementation instance, the donor node does not include configuration information of a backhaul link in the RRC message, to implicitly indicate to the IAB-node that the mobile IAB authorization status is unauthorized.

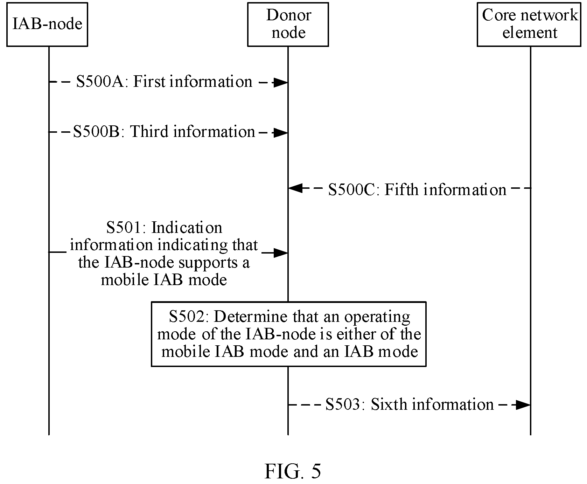

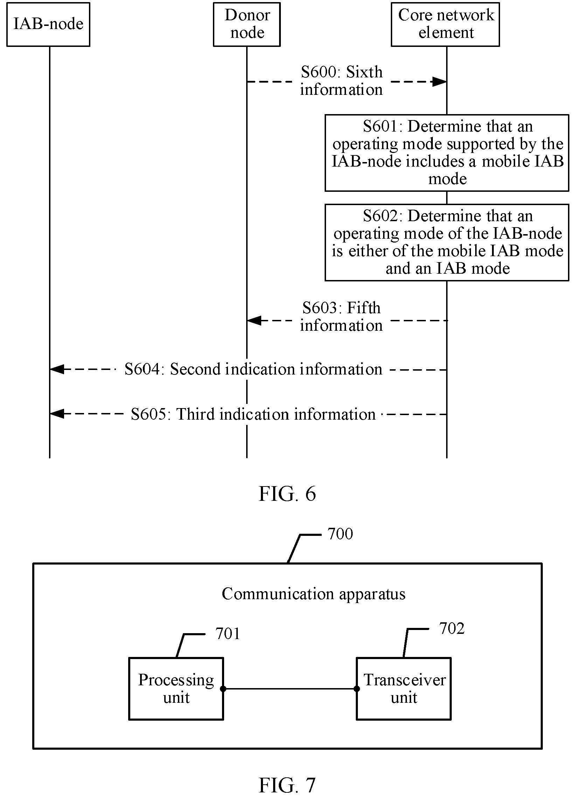

Optionally, when the second indication information is carried in the AS message, the second indication information may be a result determined by the donor node through autonomous decision (for example, an implementation shown in FIG. 5 below), or the second indication information may be a result determined by the core network element through decision (for example, an implementation shown in FIG. 6 below). When the second indication information may be the result determined by the core network element through the decision, the core network element may send the decision result of the core network element to the donor node by using an NG message (for example, an initial context configuration request (INITIAL CONTEXT SETUP REQUEST) message or a UE context modification request (UE CONTEXT MODIFICATION REQUEST) message), so that the donor node determines the second indication information based on the decision result.

Specifically, the IAB-node may receive, in step S300A, the second indication information sent by the donor node, or the IAB-node may receive, in step S300A and step S300B, the second indication information from the core network element, and the second indication information indicates at least one of the foregoing, so that the IAB-node can determine, based on the at least one of the foregoing, that the operating mode of the IAB-node is the IAB mode from the mobile IAB mode and the IAB mode. In other words, the determining basis for determining, by the IAB-node, that the operating mode is the IAB mode may be the indication information provided by the donor node or the core network element.

In a possible implementation, in the technical solution shown in FIG. 3, the method further includes:

Step S303: The IAB-node sends first information to the donor node, where the first information indicates that the operating mode of the IAB-node is the IAB mode. Therefore, the donor node may determine, based on the first information, that the operating mode of the IAB-node is the IAB mode.

In a possible implementation, the first information sent by the IAB-node in step S303 satisfies any one of the following condition A to condition D:

Condition A: The first information includes IAB-node indication information and the first information does not include mobile IAB-node indication information. For example, the first information includes an iab-NodeIndication information element but does not include a mobileIAB-NodeIndication information element.

Condition B: The first information includes the IAB-node indication information and the mobile IAB-node indication information. For example, the first information includes the iab-NodeIndication information element and the mobileIAB-NodeIndication information element. When the IAB-node and the donor node agree, in a configuration or pre-configuration manner, that the first information includes the two information elements: the iab-NodeIndication information element and the mobileIAB-NodeIndication information element, the donor node determines that the "iab-NodeIndication information element" is used as a reference, in other words, determines, based on the iab-NodeIndication information element, that the operating mode of the IAB-node is the IAB mode.

Condition C: The first information includes the IAB-node indication information, the mobile IAB-node indication information, and first indication information, where the first indication information indicates that the IAB mode is preferred. For example, the first information includes the iab-NodeIndication information element and preference information (namely, the first indication information), where the preference information indicates that the IAB mode is preferred.

Condition D: The first information includes the first indication information. For example, the first information includes preference information (namely, the first indication information), and the preference information indicates that the IAB mode is preferred.

Therefore, the first information may be implemented in the foregoing plurality of manners. To be specific, the donor node may determine, in the foregoing plurality of manners, that the first information indicates that the operating mode of the IAB-node is the IAB mode.

Optionally, the first information sent by the IAB-node in step S303 may be carried in a MSG5 or another message (for example, IAB other information (IABOtherInformation)). This is not limited herein.

In a possible implementation, after step S303, the method may further include: The IAB-node receives second information from the donor node, where the second information includes configuration information of the access link of the IAB-node and the second information does not include the configuration information of the backhaul link of the IAB-node, and/or the second information indicates that both the mobile IAB authorization status and the IAB authorization status of the IAB-node are unauthorized. Alternatively, the IAB-node receives, from the donor node, indication information indicating to release the RRC connection between the IAB-node and the donor node. Specifically, for an IAB-node supporting the mobile IAB mode and the IAB mode, when the IAB-node indicates, by using the first information, that an operating mode of the IAB-node is the IAB mode, the donor node may consider that the IAB-node is abnormal or the donor node does not expect the operating mode of the IAB-node to be the IAB mode for another reason (for example, signal quality of a signal sent by the IAB-node is less than a threshold).

Therefore, when the donor node configures the configuration information of the access link of the IAB-node by using the second information, the second information sent by the donor node may not be used to send the configuration information of the backhaul link to the IAB-node. This can prevent a terminal device or another IAB-node from accessing the IAB-node as a child node, to avoid affecting communication between the terminal device and the another IAB-node.

Alternatively, the donor node may indicate, by using the second information, that both the mobile IAB authorization status and the IAB authorization status of the IAB-node are unauthorized, to be specific, the IAB-MT is retained in a network as a common terminal device, and the IAB-DU does not set up an F1 interface connection. This can also prevent a terminal device or another IAB-node from accessing the IAB-node as a child node, to avoid affecting communication between the terminal device and the another IAB-node. Optionally, when the second information indicates that both the mobile IAB authorization status and the IAB authorization status of the IAB-node are unauthorized, the second information may be carried in a NAS message from the core network element.

Alternatively, the donor node may send, to the IAB-node (for example, by using an RRC release message), indication information indicating to release the RRC connection between the IAB-node and the donor node, to release the RRC connection of the IAB-node. This can also prevent a terminal device or another IAB-node from accessing the IAB-node as a child node, to avoid affecting communication between the terminal device and the another IAB-node.

In a possible implementation, after step S303, the method may further include: The IAB-node receives, from the donor node, indication information indicating to set up an F1 connection between the IAB-node and the donor node. Specifically, when the IAB-node has established the RRC connection to the donor node and the operating mode of the IAB-node is the mobile (mobile) IAB mode, the MT and the DU in the IAB-node may be respectively connected to different donor nodes. Therefore, after the donor node receives the first information, the donor node may send the indication information indicating to set up the F1 connection between the IAB-node and the donor node. In this way, the MT and the DU in the IAB-node can be connected to a same donor node, to avoid a communication error that is caused because the MT and the DU are connected to different donor nodes when the operating mode of the IAB-node is the IAB mode.

In a possible implementation, after step S303, the method may further include: The IAB-node sends, to the donor node, request information for requesting to set up an F1 connection between the IAB-node and the donor node, where the request information includes an identifier of the donor node and/or indication information indicating that the IAB-node is authorized to operate in the IAB mode. Specifically, when the IAB-node has established the RRC connection to the donor node and the operating mode of the IAB-node is the mobile (mobile) IAB mode, the MT and the DU in the IAB-node may be respectively connected to different donor nodes. Therefore, after the IAB-node sends the first information, the IAB-node may further send, to the donor node, the request information for requesting to set up the F1 connection between the IAB-node and the donor node. In this way, the MT and the DU in the IAB-node can be connected to a same donor node, to avoid a communication error that is caused because the MT and the DU are connected to different donor nodes when the operating mode of the IAB-node is the IAB mode.

Optionally, the identifier of the donor node is an IP address of the RRC terminating donor. In this case, the F1 terminating donor and the RRC terminating donor are a same donor node. The IAB-node may obtain the IP address of the F1 terminating donor through an operation, administration, and maintenance (operation, administration, and maintenance, OAM). For example, the IAB-node requests the IP address of the current F1 terminating donor from the OAM, and the OAM sends the IP address of the current F1 terminating donor to an IP node. Optionally, the IAB-node includes a gNB ID of the donor in a message that is sent to the OAM and that is for requesting the IP address of the current F1 terminating donor, to indicate to request the IP address of the donor from the OAM; or includes indication information indicating that the IAB-node operates in the IAB mode (for example, mobile IAB authorization succeeds, and/or IAB authorization succeeds), and the OAM determines that the IP address of the current RRC terminating donor needs to be sent to the IAB-node as the IP address of the F1 terminating donor. Alternatively, the IAB-node may obtain the IP address of the RRC terminating donor through an RRC terminating CU. For example, the IAB-node sends an RRC message to the RRC terminating donor to request the IP address, and the donor sends the RRC message to the IAB-node, where the RRC message carries the IP address of the donor. Alternatively, the IAB-node may obtain an IP address of the donor node through the F1-terminating donor connected to the DU before step S303. This is not limited herein.

According to the technical solution shown in FIG. 3, the IAB-node may be an IAB-node supporting the mobile IAB mode and the IAB mode. In step S301, when the IAB-node has not determined the operating mode (for example, the RRC connection of the IAB-node has not been established; or for another example, the RRC connection of the IAB-node has been established and the IAB-node has not sent a signal based on the backhaul link), or when the IAB-node has determined that the operating mode is the mobile IAB mode, the IAB-node may determine, in step S302, that the operating mode of the IAB-node is the IAB mode from the mobile IAB mode and the IAB mode. In other words, when the IAB-node supports the mobile IAB mode and the IAB mode, the IAB-node may be used as a party of determining the operating mode of the IAB-node, so that the IAB mode from the mobile IAB mode and the IAB mode can be flexibly selected as the operating mode of the IAB-node. Therefore, for an IAB-node supporting the mobile IAB mode and the IAB mode, communication only in the mobile IAB mode may not be limited, so that a network can be accessed by the IAB-node when the operating mode is the IAB mode or the operating mode of the IAB-node can be switched from the mobile IAB mode to the IAB mode, to improve communication flexibility of the IAB-node in the IAB network.

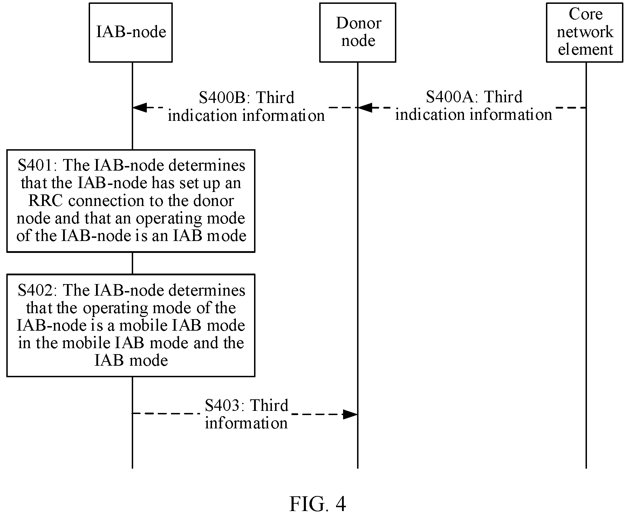

FIG. 4 is another diagram of a communication method according to this application. The method includes the following steps.

S401: An IAB-node determines that the IAB-node has established an RRC connection to a donor node and that an operating mode of the IAB-node is an IAB mode.

S402: The IAB-node determines that the operating mode of the IAB-node is a mobile IAB mode.

In a possible implementation, in step S402, the IAB-node may use locally obtained information as a determining basis for determining that the operating mode is the mobile IAB mode.

In an implementation example, energy consumption of the IAB-node operating in the mobile IAB mode may be different from that of the IAB-node operating in the IAB mode. Usually, because the mobile IAB mode supports more features (for example, the migration features described in FIG. 2f to FIG. 2h below), it is possible that the energy consumption corresponding to the mobile IAB mode is greater than the energy consumption corresponding to the IAB mode. Therefore, the IAB-node may use energy state information of the IAB-node as the determining basis for determining that the operating mode is the mobile IAB mode. For example, when the energy state information of the IAB-node indicates that energy load of the IAB-node is less than a threshold (or remaining energy is greater than a threshold), the IAB-node may determine that the operating mode is the mobile IAB mode.

In another implementation example, node movement corresponding to the IAB-node operating in the mobile IAB mode may be different from that corresponding to the IAB-node operating in the IAB mode. Usually, the mobile IAB mode may support high-speed movement, and the IAB mode may support low-speed movement or non-movement (or may not support high-speed movement). Therefore, the IAB-node may use mobility state information of the IAB-node as the determining basis for determining that the operating mode is the IAB mode. For example, when the mobility state information of the IAB-node indicates that a moving speed of the IAB-node is greater than a threshold, the IAB-node may determine that the operating mode is the mobile IAB mode.

In another implementation example, a parent node corresponding to the IAB-node operating in the mobile IAB mode may be different from that corresponding to the IAB-node operating in the IAB mode. For example, some parent nodes support only nodes that access the mobile IAB mode (denoted as first-type parent nodes), some parent nodes support only nodes that access the IAB mode (denoted as second-type parent nodes), and some parent nodes support nodes that access the mobile IAB mode and nodes that access the IAB mode (denoted as third-type parent nodes). Usually, the parent node may broadcast, in system broadcast information, indication information of a node supporting access to the mobile IAB mode. For example, indication information sent by the first-type parent node and/or indication information sent by the third-type parent node may be a mobile IAB-support (mobile iab-support) information element carried in a system information block (system information block, SIB)1, and indication information sent by the second-type parent node may be an IAB-support (iab-support) information element carried in the SIB1. Because the IAB-node may need to provide a network service for a child node through an access link, the IAB-node usually accesses a parent node with good signal quality. Correspondingly, the IAB-node may use signal quality information of the second-type parent node as the determining basis for determining that the operating mode is the mobile IAB mode. For example, when signal quality corresponding to the signal quality information of the second-type parent node is less than a threshold, the IAB-node may determine that the IAB-node currently in the IAB mode may not obtain a high-quality communication service. Therefore, the IAB-node may determine that the operating mode is the mobile IAB mode, access the first-type parent node or the third-type parent node, and obtain a communication service through the first-type parent node or the third-type parent node.

In a possible implementation, in step S402, the IAB-node may determine, as indicated by another node, that the operating mode is the IAB mode.

In an implementation instance, in the technical solution shown in FIG. 4, before step S401, the following step may be further included:

S400A: The donor node sends third indication information to the IAB-node, in other words, the third indication information may be carried in an access stratum (access stratum, AS) message.

In an implementation instance, in the technical solution shown in FIG. 4, before step S301, the following steps may be further included:

S400B: A core network device sends third indication information to the donor node.

S400A: The donor node sends the third indication information to the IAB-node, in other words, the third indication information may be carried in a non-access stratum (non-access stratum, NAS) message.

In other words, in step S402, that the IAB-node determines that the operating mode of the IAB-node is the mobile IAB mode includes: The IAB-node determines, based on the third indication information from the donor node or the third indication information from the core network element, that the operating mode of the IAB-node is the mobile IAB mode.

The third indication information indicates at least one of the following information D to information F:
information D: a mobile IAB authorization status of the IAB-node is authorized;
information E: an IAB authorization status of the IAB-node is unauthorized; or
information F: the operating mode of the IAB-node is the mobile IAB mode from the mobile IAB mode and the IAB mode.

In an implementation example, for example, the third indication information is carried in a NAS message. In step S400A, the information A received by the donor node may be implemented by setting a value of mobile IAB authorized in the NAS message to authorized (authorized), the information B received by the donor node may be implemented by setting a value of IAB authorized in the NAS message to unauthorized (not authorized), and the information C received by the donor node may be implemented by using a newly added information element in the NAS message, where the information element indicates that the operating mode of the IAB-node is the mobile IAB mode from the mobile IAB mode and the IAB mode.

In another implementation example, for example, the third indication information is carried in an AS message. The donor node may include at least one of the foregoing information A to the information C in an RRC message. In a possible implementation instance, the donor node includes configuration information of a backhaul link in the RRC message, to implicitly indicate to the IAB-node that the mobile IAB authorization status is authorized.

Optionally, when the third indication information is carried in the AS message, the third indication information may be a result determined by the donor node through autonomous decision (for example, an implementation shown in FIG. 5 below), or the third indication information may be a result determined by the core network element through decision (for example, an implementation shown in FIG. 6 below). When the third indication information may be the result determined by the core network element through decision, the core network element may send the decision result of the core network element to the donor node by using an NG message (for example, an initial context configuration request (INITIAL CONTEXT SETUP REQUEST) message or a UE context modification request (UE CONTEXT MODIFICATION REQUEST) message), so that the donor node determines the third indication information based on the decision result.

Specifically, before step S402, the IAB-node may receive the third indication information sent by the donor node, or the IAB-node may receive the third indication information from the core network element through the donor node, and the third indication information indicates at least one of the foregoing, so that the IAB-node can determine, based on the at least one of the foregoing, that the operating mode of the IAB-node is the mobile IAB mode from the mobile IAB mode and the IAB mode. In other words, the determining basis for determining, by the IAB-node, that the operating mode is the mobile IAB mode may be the indication information provided by the donor node or the core network element.

In a possible implementation, in the method shown in FIG. 4, the method further includes:

S403: The IAB-node sends third information to the donor node, where the third information indicates that the operating mode of the IAB-node is the mobile IAB mode. Therefore, the donor node may determine, based on the third information, that the operating mode of the IAB-node is the mobile IAB mode.

In a possible implementation, the third information satisfies any one of the following condition D and condition E:
Condition D: The third information includes mobile IAB-node indication information. For example, the third information includes a mobileIAB-NodeIndication information element. In addition, the third information may include an iab-NodeIndication information element, or may not include the iab-NodeIndication information element. This is not limited herein.

Condition E: The third information includes fourth indication information, and the fourth indication information indicates that the mobile IAB mode is preferred. For example, the third information includes preference information (namely, the fourth indication information), and the preference information indicates that the mobile IAB mode is preferred.

Specifically, the third information may be implemented in the foregoing plurality of manners. To be specific, the donor node may determine, in the foregoing plurality of manners, that the third information indicates that the operating mode of the IAB-node is the mobile IAB mode.

Optionally, the first information sent by the IAB-node in step S303 may be carried in an RRC message, for example, a MSG5 or IABOtherInformation.

In a possible implementation, in the method shown in FIG. 4, the method further includes: The IAB-node receives fourth information from the donor node, where the fourth information indicates to hand over a child node of the IAB-node to another network device, and/or the fourth information indicates to release a connection between the IAB-node and a first parent node of the IAB-node or release a connection between the IAB-node and a second parent node of the IAB-node, and the IAB-node communicates with the first parent node and the second parent node through dual connectivity.

Specifically, the IAB-node may support different communication features in different operating modes. For example, when the IAB-node operates in the IAB mode, the IAB-node supports dual connectivity to two different parent nodes and supports access to a child node. However, when the IAB-node operates in the mobile IAB mode, the IAB-node does not support dual connectivity to two different parent nodes and does not support access to a child node. Therefore, when the IAB-node indicates, by using the third information, to switch the operating mode of the IAB-node from the IAB mode to the mobile IAB mode, the donor node may indicate, by using the fourth information, to hand over the child node of the IAB-node and/or indicate to release one of the dual connectivity, to adapt to the mobile IAB mode of the IAB-node. This can avoid a communication error of the child node of the IAB-node operating in the mobile IAB mode and/or avoid a communication error of the IAB-node in a dual-connection scenario.

It should be understood that the child node is another IAB-node.

It should be understood that the first parent node and the second parent node may be different IAB-nodes or donor nodes. Alternatively, the first parent node and the second parent node may be a same IAB-node or donor node. Correspondingly, that the IAB-node communicates with the first parent node and the second parent node through the dual connectivity may be understood as that the IAB-node communicates with different cells served by the same parent node through the dual connectivity.

According to the technical solution shown in FIG. 4, when the IAB-node determines, in step S401, that the IAB-node has established the RRC connection to the donor node and that the operating mode of the IAB-node is the IAB mode, the IAB-node may determine, in step S402, that the operating mode of the IAB-node is the mobile IAB mode. In other words, when the IAB-node has determined that the operating mode is the IAB mode, the IAB-node may determine that the operating mode of the IAB-node is the mobile IAB mode, in other words, the IAB-node may be used as a party of determining the operating mode of the IAB-node, so that the mobile IAB mode from the mobile IAB mode and the IAB mode can be flexibly selected as the operating mode of the IAB-node. Therefore, for an IAB-node supporting the mobile IAB mode and the IAB mode, communication only in the mobile IAB mode may not be limited, so that the operating mode of the IAB-node can be switched from the IAB mode to the mobile IAB mode while the operating mode of the IAB-node is in the IAB mode, to improve communication flexibility of the IAB-node in the IAB network.

FIG. 5 is another diagram of a communication method according to this application. The method includes the following steps.

S501: A donor node receives, from an IAB-node, indication information indicating that the IAB-node supports an operating mode being a mobile IAB mode.

S502: The donor node determines that the operating mode of the IAB-node is either the mobile IAB mode or an IAB mode.

In a possible implementation, in step S502, that the donor node determines that the operating mode of the IAB-node is either the mobile IAB mode or the IAB mode includes: The donor node determines, based on at least one of the following information G to information J, that the operating mode of the IAB-node is either the mobile IAB mode or the IAB mode.

Information G: first information from the IAB-node. For example, in the method shown in FIG. 5, the donor node may further receive the first information from the IAB-node in step S500A. The first information indicates that the operating mode of the IAB-node is the IAB mode. For a specific implementation of the first information, refer to the foregoing related implementation process of step S303.

Information H: third information from the IAB-node. For example, in the method shown in FIG. 5, the donor node may further receive the third information from the IAB-node in step S500B. The third information indicates that the operating mode of the IAB-node is the mobile IAB mode. For a specific implementation of the first information, refer to the foregoing related implementation process of step S403.

Information I: fifth information from a core network element. For example, in the method shown in FIG. 5, the donor node may further receive the fifth information from the IAB-node in step S500C. The fifth information indicates that the operating mode of the IAB-node is either the mobile IAB mode or the IAB mode. For example, the fifth information may be carried in an NG message (for example, an initial context configuration request (INITIAL CONTEXT SETUP REQUEST) message or a UE context modification request (UE CONTEXT MODIFICATION REQUEST) message).

Information J: mobility state information of the IAB-node. When the donor node uses the mobility state information of the IAB-node as a determining basis, after the donor node receives the mobility state information from the IAB-node, for a process in which the donor node determines the operating mode of the IAB-node based on the mobility state information, refer to the foregoing related descriptions in FIG. 3 and FIG. 4. Optionally, after the mobility state information of the IAB-node is determined, the donor node may receive an RRC message sent by the IAB-node, where the RRC message carries the mobility state information of the IAB-node. For example, the mobility state information of the IAB-node may be carried or indicated by using a mobility state (mobilityState) information element, and the mobilityState information element may be carried in an RRC resume complete (RRCResumeComplete) message or an RRC setup complete (RRCSetupComplete) message.

Specifically, in a process in which the donor node determines that the operating mode of the IAB-node is either the mobile IAB mode or the IAB mode, the determining basis of the donor node may be at least one of the foregoing, to improve flexibility of implementing the solution.

In a possible implementation, in the method shown in FIG. 5, the method may further include:

S503: The donor node sends sixth information to the core network element, where the sixth information indicates that the operating mode of the IAB-node is either the mobile IAB mode or the IAB mode. Specifically, after the donor node determines, in step S502, that the operating mode of the IAB-node is either the mobile IAB mode or the IAB mode, the donor node may further send the sixth information to the core network element, so that the core network element determines a decision result of the donor node based on the sixth information.

Optionally, when the sixth information indicates that the operating mode of the IAB-node is the IAB mode, the sixth information satisfies any one of the following condition F to condition I:

Condition F: The sixth information includes IAB-node indication information and the sixth information does not include mobile IAB-node indication information. For example, the sixth information includes an iab-NodeIndication information element but does not include a mobileIAB-NodeIndication information element.

Condition G: The sixth information includes the IAB-node indication information and the mobile IAB-node indication information. For example, the sixth information includes an iab-NodeIndication information element and a mobileIAB-NodeIndication information element. When the donor node and the core network element agree, in a configuration or pre-configuration manner, that the sixth information includes the two information elements: the iab-NodeIndication information element and the mobileIAB-NodeIndication information element, the core network element determines that the "iab-NodeIndication information element" is used as a reference, in other words, determines, based on the iab-NodeIndication information element, that the operating mode of the IAB-node is the IAB mode.

Condition H: The sixth information includes the IAB-node indication information, the mobile IAB-node indication information, and first indication information, where the first indication information indicates that the IAB mode is preferred. For example, the sixth information includes an iab-NodeIndication information element and preference information (namely, the first indication information), where the preference information indicates that the IAB mode is preferred.

Condition I: The sixth information includes the first indication information. For example, the sixth information includes preference information (namely, the first indication information), and the preference information indicates that the IAB mode is preferred.

Specifically, when the donor node determines that the operating mode of the IAB-node is the IAB mode, the sixth information sent by the donor node satisfies any one of the foregoing. Correspondingly, the core network element may determine, based on any one of the foregoing, that the sixth information indicates that the operating mode of the IAB-node is the IAB mode.

Optionally, the sixth information sent by the donor node in step S503 may be carried in an NG message (for example, an uplink non-access stratum transport (UPLINK NAS TRANSPORT) message).

In a possible implementation, when the donor node determines that the operating mode of the IAB-node is the IAB mode, the method further includes at least one of the following (for an implementation process of at least one of the following, refer to the descriptions in the foregoing embodiment):
The donor node sends second information to the IAB-node, where the second information includes configuration information of an access link of the IAB-node and the second information does not include configuration information of a backhaul link of the IAB-node, and/or the second information indicates that both a mobile IAB authorization status and an IAB authorization status of the IAB-node are unauthorized;
the donor node sends, to the IAB-node, indication information indicating to release an RRC connection between the IAB-node and the donor node; or
the donor node sends second indication information to the IAB-node, where the second indication information indicates at least one of the following: the mobile IAB authorization status of the IAB-node is unauthorized; the IAB authorization status of the IAB-node is authorized; or the operating mode of the IAB-node is the IAB mode from the mobile IAB mode and the IAB mode.

Specifically, when the donor node determines that the operating mode of the IAB-node is the IAB mode, the donor node may further perform at least one of the foregoing interactions, so that the IAB-node can subsequently implement communication in the IAB mode based on the at least one of the foregoing interactions.

In a possible implementation, when the donor node determines that the operating mode of the IAB-node is the mobile IAB mode, the method further includes at least one of the following (for an implementation process of at least one of the following, refer to the descriptions in the foregoing embodiment):

The donor node sends fourth information to the IAB-node, where the fourth information indicates to hand over a child node of the IAB-node to another node, and/or the fourth information indicates to release a connection between the IAB-node and a first parent node or release a connection between the IAB-node and a second parent node, and the IAB-node communicates with the first parent node and the second node through dual connectivity; or
the donor node sends third indication information to the IAB-node, where the third indication information indicates at least one of the following: the mobile IAB authorization status of the IAB-node is authorized; the IAB authorization status of the IAB-node is unauthorized; or the operating mode of the IAB-node is the mobile IAB mode from the mobile IAB mode and the IAB mode.

Specifically, when the donor node determines that the operating mode of the IAB-node is the mobile IAB mode, the donor node may further perform at least one of the foregoing interactions, so that the IAB-node can subsequently implement communication in the mobile IAB mode based on the at least one of the foregoing interactions.

According to the technical solution in FIG. 5, in step S501, the donor node may receive, from the IAB-node, the indication information indicating that the IAB-node supports the operating mode being the mobile IAB mode, and determine, based on the indication information, that the IAB-node may be an IAB-node supporting the mobile IAB mode and the IAB mode. Then, the donor node may determine, in step S502, that the operating mode of the IAB-node is either the mobile IAB mode or the IAB mode. In other words, when the IAB-node supports the mobile IAB mode and the IAB mode, the donor node may be used as a party of determining the operating mode of the IAB-node, so that either the mobile IAB mode or the IAB mode can be flexibly selected as the operating mode of the IAB-node. Therefore, for the IAB-node supporting the mobile IAB mode and the IAB mode, the operating mode of the IAB-node can be either the mobile IAB mode or the IAB mode through decision of the donor node, to improve communication flexibility of the IAB-node in an IAB network.

FIG. 6 is another diagram of a communication method according to this application. The method includes the following steps.

S601: A core network element determines that an operating mode supported by an IAB-node includes a mobile IAB mode.

S602: The core network element determines that an operating mode of the IAB-node is either the mobile IAB mode or an IAB mode.

It should be noted that in step S601, the core network element may determine, in a plurality of manners, that the operating mode supported by the IAB-node includes the mobile IAB mode. For example, the core network element may receive capability information from the IAB-node through the donor node, where the capability information may indicate that the IAB-node supports the mobile IAB mode. For another example, the core network element may determine, based on subscription information, that the IAB-node supports the mobile IAB mode.

Optionally, when the operating mode supported by the IAB-node includes the mobile IAB mode, the operating mode supported by the IAB-node may further include the IAB mode. In other words, the IAB-node supporting the mobile IAB mode may also support the IAB mode.

In a possible implementation, in the method shown in FIG. 6, the core network element may further receive sixth information from the donor node in step S600. Correspondingly, that the core network element determines that the operating mode of the IAB-node is either the mobile IAB mode or the IAB mode includes: The core network element determines, based on the sixth information, that the operating mode of the IAB-node is either the mobile IAB mode or the IAB mode, where the sixth information is from the donor node of the IAB-node, and the sixth information indicates that the operating mode of the IAB-node is either the mobile IAB mode or the IAB mode. Specifically, in a process in which the donor node determines that the operating mode of the IAB-node is either the mobile IAB mode or the IAB mode, a determining basis of the donor node may be the sixth information from the donor node.

Optionally, when the core network element may use mobility state information of the IAB-node as a determining basis, after the core network element receives the mobility state information from the IAB-node through the donor node, for a process in which the core network element determines the operating mode of the IAB-node based on the mobility state information, refer to the foregoing related descriptions.

In a possible implementation, in the method shown in FIG. 6, in step S602, how the core network element determines that the operating mode of the IAB-node is either the mobile IAB mode or the IAB mode includes the following manner A and/or manner B.

Manner A: The core network element determines, based on a current time point of the IAB-node and at least one of the following, that the operating mode of the IAB-node is either the mobile IAB mode or the IAB mode: a time range in which the IAB-node is allowed to operate in the mobile IAB mode, a time range in which the IAB-node is allowed to operate in the IAB mode, a time range in which the IAB-node is not allowed to operate in the mobile IAB mode, or a time range in which the IAB-node is not allowed to operate in the IAB mode.

Manner B: The core network element determines, based on space in which the IAB-node is currently located and at least one of the following, that the operating mode of the IAB-node is either the mobile IAB mode or the IAB mode: a space range in which the IAB-node is allowed to operate in the mobile IAB mode, a space range in which the IAB-node is allowed to operate in the IAB mode, a space range in which the IAB-node is not allowed to operate in the mobile IAB mode, or a space range in which the IAB-node is not allowed to operate in the IAB mode.

In a possible implementation, in the method shown in FIG. 6, the method further includes:

Step S603: The core network element sends fifth information to the donor node of the IAB-node, where the fifth information is used to determine that the operating mode of the IAB-node is either the mobile IAB mode or the IAB mode. Specifically, after the core network element determines that the operating mode of the IAB-node is either the mobile IAB mode or the IAB mode, the core network element may further send the fifth information to the donor node, so that the donor node determines a decision result of the donor node based on the fifth information.

In an implementation example, when the fifth information includes at least one of the following, the fifth information is used to determine that the operating mode of the IAB-node is the IAB mode:
indication information indicating that an IAB authorization status of the IAB-node is authorized;
indication information indicating that a mobile IAB authorization status of the IAB-node is unauthorized; or
indication information indicating the IAB mode of the IAB-node.

Specifically, when the core network element determines that the operating mode of the IAB-node is the IAB mode, the fifth information sent by the core network element satisfies any one of the foregoing. Correspondingly, the donor node may determine, based on any one of the foregoing, that the fifth information indicates that the operating mode of the IAB-node is the IAB mode.

In another implementation example, when the fifth information includes at least one of the following, the fifth information is used to determine that the operating mode of the IAB-node is the mobile IAB mode:
indication information indicating that an IAB authorization status of the IAB-node is unauthorized;
indication information indicating that a mobile IAB authorization status of the IAB-node is authorized; or
indication information indicating the mobile IAB mode of the IAB-node.

Specifically, when the core network element determines that the operating mode of the IAB-node is the mobile IAB mode, the fifth information sent by the core network element satisfies any one of the foregoing. Correspondingly, the donor node may determine, based on any one of the foregoing, that the fifth information indicates that the operating mode of the IAB-node is the mobile IAB mode.

In a possible implementation, when the core network element determines, in step S602, that the operating mode of the IAB-node is the IAB mode, the method further includes:

S604: The core network element sends second indication information to the IAB-node through the donor node, where the second indication information indicates at least one of the following: the mobile IAB authorization status of the IAB-node is unauthorized; the IAB authorization status of the IAB-node is authorized; or the operating mode of the IAB-node is the IAB mode from the mobile IAB mode and the IAB mode. Specifically, when the core network element determines that the operating mode of the IAB-node is the IAB mode, the core network element may further send the second indication information to the IAB-node through the donor node, so that the IAB-node determines, based on the second indication information, that the operating mode of the IAB-node is the IAB mode.

It should be noted that, for an implementation process of the second indication information, refer to the foregoing implementation process of step S303.

In a possible implementation, when the core network element determines, in step S602, that the operating mode of the IAB-node is the mobile IAB mode, the method further includes:

S605: The core network element sends third indication information to the IAB-node through the donor node, where the third indication information indicates at least one of the following: the mobile IAB authorization status of the IAB-node is authorized; the IAB authorization status of the IAB-node is unauthorized; or the operating mode of the IAB-node is the mobile IAB mode from the mobile IAB mode and the IAB mode. Specifically, when the core network element determines that the operating mode of the IAB-node is the mobile IAB mode, the core network element may further send the third indication information to the IAB-node through the donor node, so that the IAB-node determines, based on the third indication information, that the operating mode of the IAB-node is the mobile IAB mode.

It should be noted that, for an implementation process of the third indication information, refer to the foregoing implementation process of step S400.

According to the technical solution shown in FIG. 6, after the core network element determines, in step S601, that the IAB-node may be an IAB-node supporting the mobile IAB mode and the IAB mode, the core network element may determine, in step S602, that the operating mode of the IAB-node is either the mobile IAB mode or the IAB mode. In other words, when the IAB-node supports the mobile IAB mode and the IAB mode, the core network element may be used as a party of determining the operating mode of the IAB-node, so that either the mobile IAB mode or the IAB mode can be flexibly selected as the operating mode of the IAB-node. Therefore, for the IAB-node supporting the mobile IAB mode and the IAB mode, the operating mode of the IAB-node can be either the mobile IAB mode or the IAB mode through decision of the core network element, to improve communication flexibility of the IAB-node in an IAB network.

Refer to FIG. 7. An embodiment of this application provides a communication apparatus 700. The communication apparatus 700 can implement functions of the communication apparatus (where the communication apparatus is the IAB-node, the donor node, or the core network element) in the foregoing method embodiments, and therefore, can also achieve beneficial effects of the foregoing method embodiments. In this embodiment of this application, the communication apparatus 700 may be a communication apparatus, or may be an integrated circuit, an element, or the like in the communication apparatus, for example, a chip.

In a possible implementation, when the apparatus 700 is configured to perform the method performed by the IAB-node in FIG. 3 and related embodiments, the apparatus 700 includes a processing unit 701. The processing unit 701 is configured to: determine that an RRC connection between an integrated access and backhaul IAB-node and a donor node has not been established, determine that the IAB-node has established the RRC connection to the donor node and that an operating mode of the IAB-node is a mobile IAB mode, or determine that the IAB-node has established the RRC connection to the donor node. The processing unit 701 is further configured to determine that the operating mode of the IAB-node is an IAB mode from the mobile IAB mode and the IAB mode.

In a possible implementation, the apparatus further includes a transceiver unit 702. The transceiver unit 702 is configured to send first information to the donor node, where the first information indicates that the operating mode of the IAB-node is the IAB mode.

In a possible implementation, the first information satisfies any one of the following: the first information includes IAB-node indication information and the first information does not include mobile IAB-node indication information; the first information includes the IAB-node indication information and the mobile IAB-node indication information; the first information includes the IAB-node indication information, the mobile IAB-node indication information, and first indication information, where the first indication information indicates that the IAB mode is preferred; or the first information includes the first indication information.

In a possible implementation, that the processing unit 701 is configured to determine that the operating mode of the IAB-node is the IAB mode from the mobile IAB mode and the IAB mode includes: The processing unit 701 is specifically configured to determine, based on second indication information from the donor node or second indication information from a core network element, that the operating mode of the IAB-node is the IAB mode from the mobile IAB mode and the IAB mode, where the second indication information indicates at least one of the following: a mobile IAB authorization status of the IAB-node is unauthorized; an IAB authorization status of the IAB-node is authorized; or the operating mode of the IAB-node is the IAB mode from the mobile IAB mode and the IAB mode.

In a possible implementation, when the apparatus 700 is configured to perform the method performed by the IAB-node in FIG. 4 and related embodiments, the apparatus 700 includes a processing unit 701. The processing unit 701 is configured to determine that an IAB-node has established an RRC connection to a donor node and that an operating mode of the IAB-node is an IAB mode. The processing unit 701 is further configured to determine that the operating mode of the IAB-node is a mobile IAB mode.

In a possible implementation, the apparatus further includes a transceiver unit 702. The transceiver unit 702 is configured to send third information to the donor node, where the third information indicates that the operating mode of the IAB-node is the mobile IAB mode.

In a possible implementation, that the transceiver unit 702 is configured to determine that the operating mode of the IAB-node is the mobile IAB mode includes: The transceiver unit 702 is specifically configured to determine, based on third indication information from the donor node or third indication information from a core network element, that the operating mode of the IAB-node is the mobile IAB mode, where the third indication information indicates at least one of the following: a mobile IAB authorization status of the IAB-node is authorized; an IAB authorization status of the IAB-node is unauthorized; or the operating mode of the IAB-node is the mobile IAB mode from the mobile IAB mode and the IAB mode.

In a possible implementation, when the apparatus 700 is configured to perform the method performed by the donor node in FIG. 5 and related embodiments, the apparatus 700 includes a processing unit 701 and a transceiver unit 702. The transceiver unit 702 is configured to receive, from an IAB-node, indication information indicating that the IAB-node supports an operating mode being a mobile IAB mode. The processing unit 701 is configured to determine that the operating mode of the IAB-node is either the mobile IAB mode or an IAB mode.

In a possible implementation, that the processing unit 701 is configured to determine that the operating mode of the IAB-node is either the mobile IAB mode or the IAB mode includes: The processing unit 701 is specifically configured to determine that the operating mode of the IAB-node is either the mobile IAB mode or the IAB mode, based on at least one of the following, including: first information from the IAB-node, third information from the IAB-node, fifth information from a core network element, and mobility state information of the IAB-node, where the first information indicates that the operating mode of the IAB-node is the IAB mode, the third information indicates that the operating mode of the IAB-node is the mobile IAB mode, and the fifth information indicates that the operating mode of the IAB-node is either the mobile IAB mode or the IAB mode.

In a possible implementation, the transceiver unit 702 is further configured to send sixth information to the core network element, where the sixth information indicates that the operating mode of the IAB-node is either the mobile IAB mode or the IAB mode.

In a possible implementation, when the apparatus 700 is configured to perform the method performed by the core network element in any one of the foregoing embodiments, the apparatus 700 includes a processing unit 701. The processing unit 701 is configured to determine that an operating mode supported by an IAB-node includes a mobile IAB mode. The processing unit 701 is further configured to determine that an operating mode of the IAB-node is either the mobile IAB mode or an IAB mode.

In a possible implementation, the transceiver unit 702 is further configured to send fifth information to a donor node of the IAB-node, where the fifth information is used to determine that the operating mode of the IAB-node is either the mobile IAB mode or the IAB mode.

In a possible implementation, that the processing unit 701 is configured to determine that the operating mode of the IAB-node is either the mobile IAB mode or the IAB mode includes: The processing unit 701 is specifically configured to determine, based on sixth information, that the operating mode of the IAB-node is either the mobile IAB mode or the IAB mode, where the sixth information is from the donor node of the IAB-node, and the sixth information indicates that the operating mode of the IAB-node is either the mobile IAB mode or the IAB mode.

In a possible implementation, that the processing unit 701 is configured to determine that the operating mode of the IAB-node is either the mobile IAB mode or the IAB mode includes: The processing unit 701 is specifically configured to determine that the operating mode of the IAB-node is the mobile IAB mode. The transceiver unit 702 is further configured to send third indication information to the IAB-node through the donor node, where the third indication information indicates at least one of the following: a mobile IAB authorization status of the IAB-node is authorized; an IAB authorization status of the IAB-node is unauthorized; or the operating mode of the IAB-node is the mobile IAB mode from the mobile IAB mode and the IAB mode.

It should be noted that for details of content such as an information execution process of the unit of the communication apparatus 700, refer to the descriptions in the foregoing method embodiments of this application. Details are not described herein again.

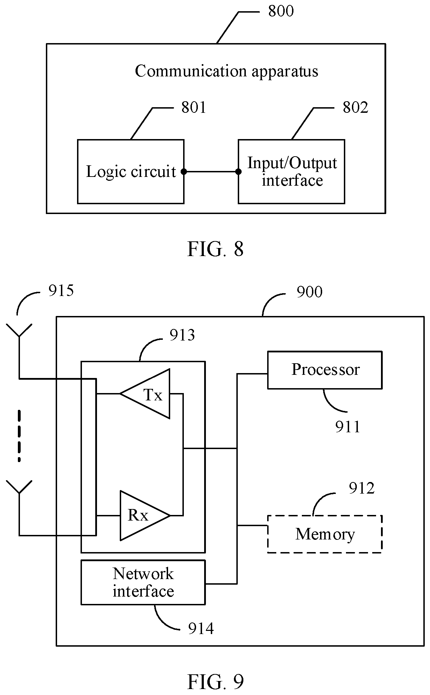

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to: determine that an RRC connection between an integrated access and backhaul IAB-node and a donor node has not been established, determine that the IAB-node has established the RRC connection to the donor node and that an operating mode of the IAB-node is a mobile IAB mode, or determine that the IAB-node has established the RRC connection to the donor node. The logic circuit 801 is further configured to determine that the operating mode of the IAB-node is an IAB mode from the mobile IAB mode and the IAB mode.

Optionally, the logic circuit 801 is configured to determine that the IAB-node has established the RRC connection to the donor node and that the operating mode of the IAB-node is the IAB mode. The logic circuit 801 is further configured to determine that the operating mode of the IAB-node is the mobile IAB mode.

Optionally, the input/output interface 802 is configured to receive, from the IAB-node, indication information indicating that the IAB-node supports an operating mode being the mobile IAB mode. The logic circuit 801 is configured to determine that the operating mode of the IAB-node is either the mobile IAB mode or the IAB mode.

Optionally, the logic circuit 801 is configured to determine that the operating mode supported by the IAB-node includes the mobile IAB mode. The logic circuit 801 is further configured to determine that the operating mode of the IAB-node is either the mobile IAB mode or the IAB mode.

The logic circuit 801 and the input/output interface 802 may further perform other steps performed by the IAB-node, the donor node, or the core network element in any embodiment and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

FIG. 9 is a diagram of a structure of a communication apparatus 900 in the foregoing embodiments according to an embodiment of this application. The communication apparatus 900 may be specifically a communication apparatus serving as the network device like the IAB-node, the donor node, or the core network element in the foregoing embodiments. For the structure of the communication apparatus, refer to the structure shown in FIG. 9.

The communication apparatus 900 includes at least one processor 911 and at least one network interface 914. Further optionally, the communication apparatus further includes at least one memory 912, at least one transceiver 913, and one or more antennas 915. The processor 911, the memory 912, the transceiver 913, and the network interface 914 are connected, for example, through a bus. In this embodiment of this application, the connection may include various interfaces, transmission lines, buses, or the like. This is not limited in this embodiment. The antenna 915 is connected to the transceiver 913. The network interface 914 is configured to enable the communication apparatus to communicate with another communication device through a communication link. For example, the network interface 914 may include a network interface, for example, an S1 interface, between the communication apparatus and a core network device. The network interface may include a network interface, for example, an X2 or Xn interface, between the communication apparatus and another communication apparatus (for example, another network device or a core network device).

The transceiver unit 702 shown in FIG. 7 may be a communication interface. The communication interface may be the network interface 914 in FIG. 9, and the network interface 914 may include an input interface and an output interface. Alternatively, the network interface 914 may be a transceiver circuit, and the transceiver circuit may include an input interface circuit and an output interface circuit.

The processor 911 is mainly configured to: process a communication protocol and communication data, control the entire communication apparatus, execute a software program, and process data of the software program. For example, the processor 911 is configured to support the communication apparatus in performing the action described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 911 in FIG. 9 may integrate functions of the baseband processor and the central processing unit. A person skilled in the art may understand that the baseband processor and the central processing unit may alternatively be independent processors, and are interconnected by using a technology, for example, through a bus. A person skilled in the art may understand that the terminal device may include a plurality of baseband processors to adapt to different network standards, and the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be embedded into the processor, or may be stored in the memory in a form of a software program, and the processor performs the software program to implement a baseband processing function.

The memory is mainly configured to store the software program and the data. The memory 912 may exist independently, and is connected to the processor 911. Optionally, the memory 912 and the processor 911 may be integrated together, for example, integrated into one chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual terminal device, there may be a plurality of processors and a plurality of memories. The memory may also be referred to as a storage medium, a storage device, or the like. The memory may be a storage element on a same chip as the processor, namely, an on-chip storage element, or may be an independent storage element. This is not limited in this embodiment of this application.

The transceiver 913 may be configured to support receiving or sending of a radio frequency signal between the communication apparatus and the terminal, and the transceiver 913 may be connected to the antennas 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 further processes the digital baseband signal or the digital intermediate frequency signal, for example, performs demodulation processing and decoding processing. In addition, the transmitter Tx of the transceiver 913 is further configured to: receive a modulated digital baseband signal or a modulated digital intermediate frequency signal from the processor 911, convert the modulated digital baseband signal or digital intermediate frequency signal into a radio frequency signal, and send the radio frequency signal through the one or more antennas 915. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as digital signals.

The transceiver 913 may also be referred to as a transceiver unit, a transceiver device, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitter, a transmitter device, a transmitter circuit, or the like.

It should be noted that the communication apparatus 900 shown in FIG. 9 may be specifically configured to: implement steps implemented by the network device in the foregoing method embodiments, and achieve the technical effects corresponding to the network device. For a specific implementation of the communication apparatus 900 shown in FIG. 9, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method described in the possible implementation of the IAB-node, the donor node, or the core network element in the foregoing embodiments.

An embodiment of this application further provides a computer program product (or referred to as a computer program). When the computer program product is executed by a processor, the processor performs the method described in the possible implementation of the IAB-node, the donor node, or the core network element.

An embodiment of this application further provides a chip system. The chip system includes at least one processor, configured to support a communication apparatus in implementing the function in the foregoing possible implementation of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the IAB-node, the donor node, or the core network element in the foregoing method embodiments.

An embodiment of this application further provides a communication system. The communication system includes at least two devices of the IAB-node, the donor node, or the core network element in any one of the foregoing embodiments.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the communication apparatus is a chip used in a terminal, the chip in the terminal implements the function of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent by these modules to the base station.

When the communication apparatus is a chip used in a base station, the chip in the base station implements the function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The general-purpose processor may be a microprocessor, any conventional processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining that a radio resource control RRC connection between an integrated access and backhaul IAB-node and a donor node has not been established, determining that the IAB-node has established the RRC connection to the donor node and that an operating mode of the IAB-node is a mobile IAB mode, or determining that the IAB-node has established the RRC connection to the donor node; and
determining that the operating mode of the IAB-node is the IAB mode from the mobile IAB mode and the IAB mode.

2. The method according to claim 1, wherein the method further comprises:
sending first information to the donor node, wherein the first information indicates that the operating mode of the IAB-node is the IAB mode.

3. The method according to claim 2, wherein the first information satisfies any one of the following:
the first information comprises IAB-node indication information and the first information does not comprise mobile IAB-node indication information;
the first information comprises the IAB-node indication information and the mobile IAB-node indication information;
the first information comprises the IAB-node indication information, the mobile IAB-node indication information, and first indication information, wherein the first indication information indicates that the IAB mode is preferred; or
the first information comprises the first indication information.

4. The method according to any one of claims 1 to 3, wherein the method further comprises:
receiving second information from the donor node, wherein the second information comprises configuration information of an access link of the IAB-node and the second information does not comprise configuration information of a backhaul link of the IAB-node, and/or the second information indicates that both a mobile IAB authorization status and an IAB authorization status of the IAB-node are unauthorized.

5. The method according to any one of claims 1 to 4, wherein the method further comprises: receiving, from the donor node, indication information indicating to release the RRC connection between the IAB-node and the donor node.

6. The method according to any one of claims 1 to 5, wherein the determining that the operating mode of the IAB-node is the IAB mode from the mobile IAB mode and the IAB mode comprises:
determining, based on second indication information from the donor node or second indication information from a core network element, that the operating mode of the IAB-node is the IAB mode from the mobile IAB mode and the IAB mode, wherein
the second indication information indicates at least one of the following:
the mobile IAB authorization status of the IAB-node is unauthorized;
the IAB authorization status of the IAB-node is authorized; or
the operating mode of the IAB-node is the IAB mode from the mobile IAB mode and the IAB mode.

7. A communication method, comprising:
determining that an IAB-node has established an RRC connection to a donor node and that an operating mode of the IAB-node is an IAB mode; and
determining that the operating mode of the IAB-node is a mobile IAB mode.

8. The method according to claim 7, wherein the method further comprises:
sending third information to the donor node, wherein the third information indicates that the operating mode of the IAB-node is the mobile IAB mode.

9. The method according to claim 8, wherein the third information satisfies any one of the following:
the third information comprises the mobile IAB-node indication information; or
the third information comprises fourth indication information, wherein the fourth indication information indicates that the mobile IAB mode is preferred.

10. The method according to any one of claims 7 to 9, wherein the method further comprises:
receiving fourth information from the donor node, wherein the fourth information indicates to hand over a child node of the IAB-node to another network device, and/or the fourth information indicates to release a connection between the IAB-node and a first parent node of the IAB-node or release a connection between the IAB-node and a second parent node of the IAB-node, and the IAB-node communicates with the first parent node and the second parent node through dual connectivity.

11. The method according to any one of claims 7 to 10, wherein the determining that the operating mode of the IAB-node is the mobile IAB mode comprises:
determining, based on third indication information from the donor node or third indication information from a core network element, that the operating mode of the IAB-node is the mobile IAB mode, wherein
the third indication information indicates at least one of the following:
a mobile IAB authorization status of the IAB-node is authorized;
an IAB authorization status of the IAB-node is unauthorized; or
the operating mode of the IAB-node is the mobile IAB mode from the mobile IAB mode and the IAB mode.

12. A communication method, comprising:
receiving, from an IAB-node, indication information indicating that the IAB-node supports an operating mode being a mobile IAB mode; and
determining that the operating mode of the IAB-node is either the mobile IAB mode or an IAB mode.

13. The method according to claim 12, wherein the determining that the operating mode of the IAB-node is either the mobile IAB mode or the IAB mode comprises:
determining that the operating mode of the IAB-node is either the mobile IAB mode or the IAB mode, based on at least one of the following, comprising:
first information from the IAB-node, third information from the IAB-node, fifth information from a core network element, and mobility state information of the IAB-node, wherein
the first information indicates that the operating mode of the IAB-node is the IAB mode, the third information indicates that the operating mode of the IAB-node is the mobile IAB mode, and the fifth information indicates that the operating mode of the IAB-node is either the mobile IAB mode or the IAB mode.

14. The method according to claim 12 or 13, wherein the method further comprises:
sending sixth information to the core network element, wherein the sixth information indicates that the operating mode of the IAB-node is either the mobile IAB mode or the IAB mode.

15. The method according to claim 14, wherein when the sixth information indicates that the operating mode of the IAB-node is the IAB mode, the sixth information satisfies any one of the following:
the sixth information comprises IAB-node indication information and the sixth information does not comprise mobile IAB-node indication information;
the sixth information comprises the IAB-node indication information and the mobile IAB-node indication information;
the sixth information comprises the IAB-node indication information, the mobile IAB-node indication information, and first indication information, wherein the first indication information indicates that the IAB mode is preferred; or
the sixth information comprises the first indication information.

16. The method according to any one of claims 12 to 15, wherein when it is determined that the operating mode of the IAB-node is the IAB mode, the method further comprises at least one of the following:
sending second information to the IAB-node, wherein the second information comprises configuration information of an access link of the IAB-node and the second information does not comprise configuration information of a backhaul link of the IAB-node, and/or the second information indicates that both a mobile IAB authorization status and an IAB authorization status of the IAB-node are unauthorized;
sending, to the IAB-node, indication information indicating to release an RRC connection between the IAB-node and the donor node; or
sending second indication information to the IAB-node, wherein the second indication information indicates at least one of the following:
the mobile IAB authorization status of the IAB-node is unauthorized;
the IAB authorization status of the IAB-node is authorized; or
the operating mode of the IAB-node is the IAB mode from the mobile IAB mode and the IAB mode.

17. The method according to any one of claims 12 to 16, wherein when it is determined that the operating mode of the IAB-node is the mobile IAB mode, the method further comprises at least one of the following:
sending fourth information to the IAB-node, wherein the fourth information indicates to hand over a child node of the IAB-node to another node, and/or the fourth information indicates to release a connection between the IAB-node and a first parent node or release a connection between the IAB-node and a second parent node, and the IAB-node communicates with the first parent node and the second node through dual connectivity; or
sending third indication information to the IAB-node, wherein the third indication information indicates at least one of the following:
the mobile IAB authorization status of the IAB-node is authorized;
the IAB authorization status of the IAB-node is unauthorized; or
the operating mode of the IAB-node is the mobile IAB mode from the mobile IAB mode and the IAB mode.

18. A communication method, comprising:
determining that an operating mode supported by an IAB-node comprises a mobile IAB mode; and
determining that an operating mode of the IAB-node is either the mobile IAB mode or an IAB mode.

19. The method according to claim 18, wherein the method further comprises:
sending fifth information to a donor node of the IAB-node, wherein the fifth information is used to determine that the operating mode of the IAB-node is either the mobile IAB mode or the IAB mode.

20. The method according to claim 18 or 19, wherein the determining that the operating mode of the IAB-node is either the mobile IAB mode or the IAB mode comprises:
determining, based on sixth information, that the operating mode of the IAB-node is either the mobile IAB mode or the IAB mode, wherein the sixth information is from the donor node of the IAB-node, and the sixth information indicates that the operating mode of the IAB-node is either the mobile IAB mode or the IAB mode.

21. The method according to claim 19 or 20, wherein when the fifth information comprises at least one of the following, the fifth information is used to determine that the operating mode of the IAB-node is the IAB mode:
indication information indicating that an IAB authorization status of the IAB-node is authorized;
indication information indicating that a mobile IAB authorization status of the IAB-node is unauthorized; or
indication information indicating the IAB mode of the IAB-node.

22. The method according to any one of claims 18 to 21, wherein when the fifth information comprises at least one of the following, the fifth information is used to determine that the operating mode of the IAB-node is the mobile IAB mode:
indication information indicating that the IAB authorization status of the IAB-node is unauthorized;
indication information indicating that the mobile IAB authorization status of the IAB-node is authorized; or
indication information indicating the mobile IAB mode of the IAB-node.

23. The method according to any one of claims 18 to 22, wherein the determining that the operating mode of the IAB-node is either the mobile IAB mode or the IAB mode comprises:
determining that the operating mode of the IAB-node is the IAB mode; and
the method further comprises:
sending second indication information to the IAB-node through the donor node, wherein the second indication information indicates at least one of the following:
the mobile IAB authorization status of the IAB-node is unauthorized;
the IAB authorization status of the IAB-node is authorized; or
the operating mode of the IAB-node is the IAB mode from the mobile IAB mode and the IAB mode.

24. The method according to any one of claims 18 to 23, wherein the determining that the operating mode of the IAB-node is either the mobile IAB mode or the IAB mode comprises:
determining that the operating mode of the IAB-node is the mobile IAB mode; and
the method further comprises:
sending third indication information to the IAB-node through the donor node, wherein the third indication information indicates at least one of the following:
the mobile IAB authorization status of the IAB-node is authorized;
the IAB authorization status of the IAB-node is unauthorized; or
the operating mode of the IAB-node is the mobile IAB mode from the mobile IAB mode and the IAB mode.

25. A communication apparatus, comprising a module configured to perform the method according to any one of claims 1 to 24.

26. A communication apparatus, comprising at least one processor, wherein the at least one processor is coupled to a memory, and the at least one processor is configured to perform the method according to any one of claims 1 to 24.

27. A readable storage medium, wherein the storage medium stores a computer program or instructions; and when the computer program or the instructions are executed by a communication apparatus, the method according to any one of claims 1 to 24 is implemented.
